# EUROPEAN PATENT SPECIFICATION

(11) **EP 2 930 096 B1**
(45) Date of publication and mention of the grant of the patent: **28.02.2018**
(21) Application number: 13861268.4
(22) Date of filing: 05.12.2013
(51) Int. Cl.: B62M 6/65

(54) **ELECTRIC HUB AND ELECTRIC BICYCLE**
ELEKTRISCHE NABE UND ELEKTRISCHES FAHRRAD
MOYEU ÉLECTRIQUE ET VÉLO ÉLECTRIQUE

(30) Priority: 05.12.2012 JP 2012265863; 13.12.2012 JP 2012271842; 19.12.2012 JP 2012276318
(43) Date of publication of application: 14.10.2015
(73) Proprietor: Panasonic Intellectual Property Management Co., Ltd., Osaka-shi, Osaka 540-6207 (JP)
(72) Inventor: MIYOSHI, Takehiro, Osaka-shi, Osaka 540-6207 (JP); NISHIMORI,Masato, Osaka-shi, Osaka 540-6207 (JP)
(74) Representative: Grünecker Patent- und Rechtsanwälte PartG mbB
(86) International application number: PCT/JP2013/007145
(87) International publication number: WO 2014/087653

(56) References cited:
- WO-A1-98/55353
- FR-A1- 2 264 676
- FR-A1- 2 736 033
- JP-A- 2000 053 068
- JP-A- 2003 104 275
- JP-A- 2011 160 516
- JP-A- 2012 121 337
- JP-A- 2012 121 407
- JP-B1- 5 084 977
- US-A- 5 492 211

## Description

### Technical Field

The present invention relates to an electric hub and an electric bicycle including the electric hub.

### Background Art

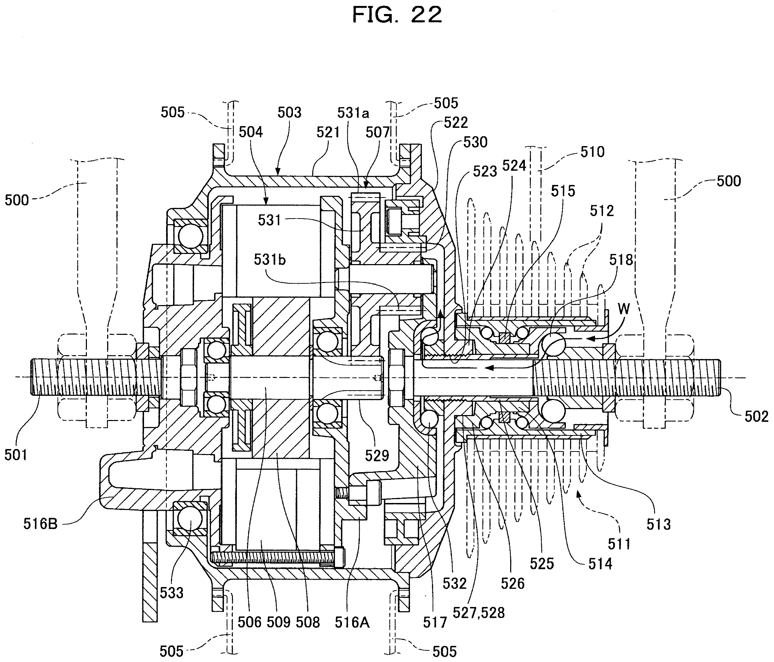

As shown in FIG. 22, a conventional electric hub provided at the center of a wheel of an electric bicycle includes, for example, a pair of right and left hub spindles 501 and 502 that are fixed to a frame 500, e.g., the chain stay of the electric bicycle, a hub body 503 rotatable relative to the hub spindles 501 and 502, and a motor 504 that is provided in the hub body 503 so as to rotate the hub body 503 (For example, Patent Literature 1, JP-A-2012-121337, which corresponds to EP-A-2 650 204, and discloses the features of the preamble of claim 1). In FIG. 22, reference numeral 505 denotes spokes, reference numeral 506 denotes the rotating shaft of the motor 504, reference numeral 508 denotes the rotor of the motor 504, reference numeral 509 denotes the stator of the motor 504, and reference numerals 516A and 516B denote the housing bodies of the motor 504. The rotating shaft 506 is disposed between the right and left hub spindles 501 and 502. Moreover, reference numeral 510 denotes a chain that receives a pedal force (human driving force) transmitted from a pedal, and reference numeral 511 denotes a freewheel for an external derailleur.

The rotor 508 and the rotating shaft 506 of the motor 504 are interlocked with the hub body 503 via a reduction mechanism 507 including a planetary gear mechanism provided in the hub body 503. The hub body 503 includes a substantially cylindrical body member 521 having one opening side, a disc-like cover member 522 that closes the opening side of the body member 521, a through hole 523 and a boss 524 that are formed at the center of the cover member 522, and a cylindrical fitting 525 that is inserted into a through hole 514 and is rotatably fit onto the hub spindle 502.

The freewheel 511 outside the hub body 503 is rotatably fit onto the hub spindle 502. The freewheel 511 includes a cylindrical outer body 513 having a plurality of sprockets 512 engaged with the chain 510, a cylindrical inner body 514 provided in the outer body 513, and a one-way clutch 515 that is provided between the outer body 513 and the inner body 514 and transmits a turning force only to the hub body 503 from the sprockets 512. Furthermore, a large-diameter section 526 is formed on one side of the inner body 514, and serration sections 527 and 528 are formed and engaged with each other via sawtooth portions formed on the inner periphery of the large-diameter section 526 and the outer periphery of the boss 524 of the cover member 522. The serration sections 527 and 528 are identical in cross section (in other words, a constant diameter) along the axial direction of the hub spindle 502. The outer body 513 contains a bearing body 518 that rotatably supports the outer body 513.

The reduction mechanism 507 includes a sun gear 529 formed on an end of the rotating shaft 506, an annular internal gear 530 attached to the interior of the cover member 522, and a plurality of rotatable planetary gears 531 engaged with the sun gear 529 and the internal gear 530. One end of the planetary gear 531 is supported by the one housing body 516A that holds the motor 504 while another end of the planetary gear 531 is supported by a support frame 517 attached to one motor housing body 516.

The planetary gear 531 has a large gear section 531a and a small gear section 531b formed. The large gear section 531a of the planetary gear 531 is engaged with the sun gear 529 while the internal gear 530 is engaged with the small gear section 531b of the planetary gear 531. Thus, the rotation speed of the rotating shaft 506 of the motor 504 is reduced, that is, a torque is increased, and an auxiliary driving force is transmitted to the hub body 503 to interlock the hub body 503 with the rotating shaft 506. Moreover, a bearing 532 that rotatably supports the hub body 503 is disposed between the cover member 522 and the support frame 517. The bearing 532 is, for example, a cup and cone bearing. Furthermore, a bearing 533 that rotatably supports the hub body 503 is disposed between the other housing body 516B and the hub body 503.

When the electric bicycle is driven by a rider, a pedal force (human driving force) applied to the pedal is transmitted to the freewheel 511 via the chain 510. Subsequently, the rotations of the freewheel 511 are transmitted from the outer body 513 to the inner body 514 via the one-way clutch 515. The rotations of the inner body 514 are then transmitted to the cover member 522 via the serration sections 527 and 528, allowing the inner body 514, the fitting 525, the cover member 522, and the body member 521 to rotate integrally so as to rotate the hub body 503 about the axis. The motor 504 is rotated according to a pedal force applied to the pedal, and then the hub body 503 is rotated while the rotary force of the motor 504 is added as an auxiliary driving force to the pedal force (human driving force).

In a widely used structure for transmitting, to the hub body 503, a driving force transmitted to the sprockets 512 engaged with the chain 510 of the freewheel 511, the inner body 514 and the cover member 522 of the hub body 503 are joined with screws instead of the serration sections 527 and 528. In the case of joining with screws, however, a turning force is transmitted while being applied perpendicularly to the axis of an external thread section. This may break the external thread. As a mechanism for transmitting a large turning force, this structure is less reliable than the use of the serration sections 527 and 528.

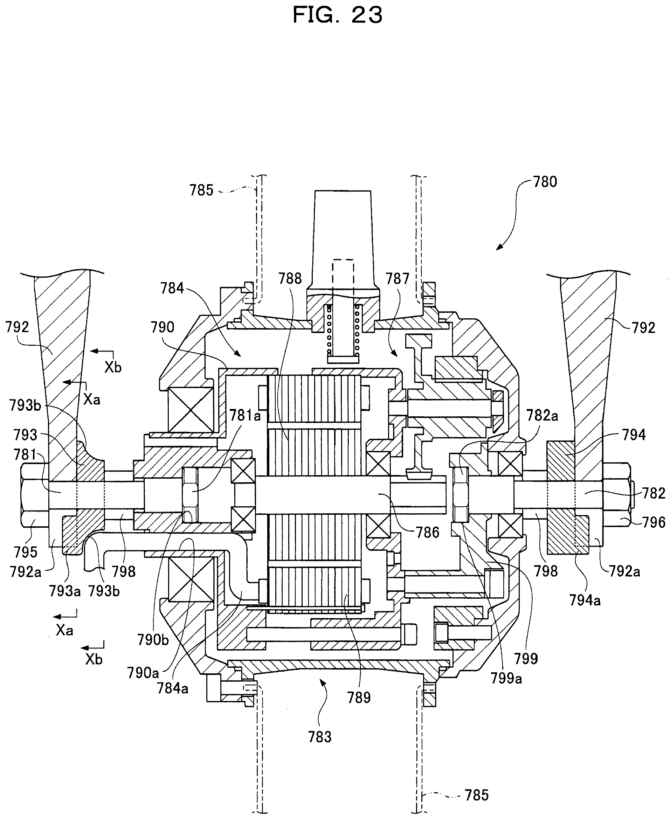

For example, as shown in FIG. 23, a conventional electric hub provided at the center of a wheel of an electric bicycle includes a pair of right and left hub spindles 781 and 782 for fixation, a hub body 783 rotatable relative to the hub spindles 781 and 782, and a motor 784 that is provided in the hub body 783 so as to rotate the hub body 783. In FIG. 23, reference numeral 785 denotes spokes and reference numeral 786 denotes the rotating shaft of the motor 784. The rotating shaft 786 is disposed between the right and left hub spindles 781 and 782.

A rotor 788 and the rotating shaft 786 of the motor 784 are interlocked with the hub body 783 via a reduction mechanism 787 including a planetary gear mechanism provided in the hub body 783. A stator 789 of the motor 784 and a part of a motor housing 790 for holding the stator 789 are protruded outward with the hub spindle 781 from the inside of the hub body 783. A connecting wire 784a including a power line and a signal line that are connected to the motor 784 is drawn to the outside through a hole section 790a formed on the housing 790.

The ends of the inserted portions of the hub spindles 781 and 782 into the hub body 783 have engaging sections 781a and 782a shaped like hexagons formed. The engaging sections 781a and 782a are fit into an engaging hole section 790b shaped like a hexagonal hole formed on the motor housing 790 and an engaging hole section 799a of a holding frame section 799 shaped like a hexagonal hole provided on the reduction mechanism 787. With this configuration, the motor housing 790 and the holding frame section 799 are assembled onto the hub spindles 781 and 782 while being restrained so as not to rotate about the axis of the hub spindles 781 and 782.

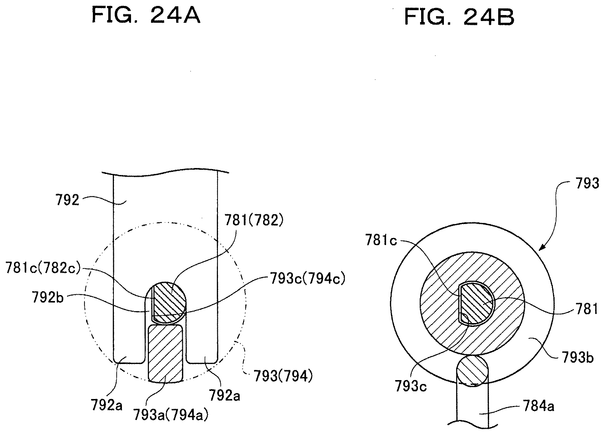

The hub spindles 781 and 782 restrained so as not to rotate about the axis are fixed on the ends of a frame 792 of the electric bicycle with locking members 793 and 794 and nuts 795 and 796 or the like. In FIG. 23, reference numeral 798 denotes resin spacers. As shown in FIG. 24(a), a fork-end claw section 792a is formed on the end of the frame 792. The fork end is formed by a groove 792b having one opening end. Protrusions 793a and 794a formed on the locking members 793 and 794 are fit into the claw section 792a. Hence, the locking members 793 and 794 are restrained so as not to rotate in the circumferential direction of the hub spindles 781 and 782. As shown in FIG. 24(b), the fitting portions of the hub spindles 781 and 782 and the locking members 793 and 794 circular in cross section are partially removed to have chamfered portions 781c, 782c, 793c, and 794c shaped like letter "D" with flat surfaces in cross section. With this configuration, the hub spindles 781 and 782 are restrained so as not to circumferentially rotate via the locking members 793 and 794.

As shown in FIG. 23, the connecting wire 784a of the motor 784 is drawn near the hub spindle 781 of the motor housing 790. As shown in FIGS. 23 and 24(b), the locking member 793 disposed near the drawn connecting wire 784a has a curved recess section 793b that is formed around the entire circumference of the locking member 793 so as to curve and guide the connecting wire 784a. The connecting wire 784a is disposed so as not to interrupt the frame 792 while being guided by a part of the curved recess section 793b.

The above electric hub 780 is disposed at, for example, the center of a front wheel. In this case, the hub spindles 781 and 782 are attached to an end (lower end) of a front fork serving as the claw section 792a of the frame 792. The electric hub 780 may be provided on a rear wheel. In this case, the hub spindles 781 and 782 are attached to an end (rear end) of a chain stay serving as the claw section 792a of the frame 792.

If an auxiliary driving force is added in this configuration, the rotating shaft 786 rotates with the rotor 788 of the motor 784, allowing the reduction mechanism 787 to reduce the speed of the hub body 783 rotating about the axis of the hub spindles 781 and 782. Thus, the wheel having the electric hub 780 is rotated by the auxiliary power of the motor 784. When the rotor 788 of the motor 784 rotates, the motor housing 790 having the stator 789 of the motor 784 receives the reaction force of the rotary force of the rotor 788. In other words, if the stator 789 of the motor 784 is not firmly fixed, the rotary force of the rotor 788 decreases, leading to a smaller auxiliary driving force. In this case, the reaction force of the rotary force of the rotor 788 is received by the engaging section 781a (FIG. 23) of the hub spindle 781 fit into the engaging hole section 790b of the motor housing 790, the chamfered portion 793c of the locking member 793 fit into the chamfered portion 781c of the hub spindle 781, and the claw section 792a (FIGS. 24(a) and 24(b)) of a frame 797 engaged with the protrusion 793a of the locking member 793.

For example, the electric hub 780 configured thus is described in Patent Literature 2, Patent Literature 3, and so on. In recent years, it is widely known that the motor of an electric hub is switched between an operation for generating an auxiliary driving force applied to a wheel and a regenerating operation for generating power according to a force from the wheel.

### Citation List

### Patent Literatures

Patent Literature 1: Japanese Patent Laid-Open No. 2012-121337
Patent Literature 2: Japanese Patent Laid-Open No. 2006-96059
Patent Literature 3: Japanese Patent Laid-Open No. 2009-12542

### Summary of Invention

### Technical Problem

In many cases, the hub body 503 of the electric hub in FIG. 22 is made of light alloys such as aluminum to achieve weight reduction, resulting in lower strength than a component for transmitting a driving force to the hub body 503 from the inner body 514 or the like from the chain 510.

Hence, for example, even if inner body 514 and the cover member 522 of the hub body 503 are joined using the serration sections 527 and 528 as shown in FIG. 22, a large driving force applied from the inner body 514 of the freewheel 511 may break the serration section 528 of the cover member 522 because of insufficient strength. In order to prevent this problem, the serration sections 527 and 528 may be extended in the axial direction. The hub body 503 has a limited width between the right and left frames 500 but contains many components such as the motor 504 and the reduction mechanism 507. Thus, since the serration sections 527 and 528 are remarkably extended in the axial direction, it is difficult to considerably increase the width of the electric hub.

The electric hub in FIG. 22 contains components such as the motor 504 and the reduction mechanism 507 and thus the hub body 503 needs to be protected from rainwater W and so on. Hence, in order to prevent the rainwater W from entering the bearings 532 and 533 that rotatably support the hub body 503, shield bearings having waterproofness are preferably used as the bearings 532 and 533 in the electric hub. However, only limited kinds of waterproof shield bearings are available according to dimensional standards. This frequently leads to low design freedom.

In the location of the bearing 533 that rotatably supports the hub body 503, any other components are not disposed and thus a relatively wide space is available for placement. Hence, the bearing 533 may be a shield bearing.

In contrast, near the bearing 532 disposed between the cover member 522 and the support frame 517, a large number of components, e.g., the components of the reduction mechanism 507 are disposed, leading to a restricted space for the bearing 532. Thus, in many cases, the bearing 532 does not have waterproofness or is not so resistant to water. If the bearing 532 that rotatably supports the hub body 503 is a shield bearing, the waterproofness improves but the provision of a shield member increases a contact resistance. This may prevent a smooth rotation of the hub body 503.

As shown in FIG. 22, when the freewheel for the external derailleur is provided, the bearing 532 is placed relatively inward. Since the rainwater W may reach the bearing 532 through the location of the bearing body 518 and a clearance between the hub spindle 502 and the fitting 525, the bearing 532 preferably has waterproofness.

In the conventional electric hub 780 shown in FIGS. 23, 24(a), and 24(b), the hub spindles 781 and 782 and the locking members 793 and 794 are engaged with each other only by the chamfered portions 781c, 782c, 793c, and 794c. This may cause rattles (an excessive movement with a gap) between the locking members 793 and 794, between the hub spindles 781 and 782, and between the motor housing 790 and the holding frame section 799 during driving of the motor 784. Unfortunately, rattles occur (an excessive movement with a gap) particularly between the motor housing 790 and the hub spindle 781 that are likely to directly receive the force of the motor 784.

Furthermore, such rattles may concentrate a force on the engaging hole section 790b of the motor housing 790 where the engaging section 781a of the hub spindle 781 is fit. Thus, the engaging hole section 790b of the motor housing 790 may be deformed and damaged during an extended period of use of the electric hub 780. In the use of the motor 784 of the electric hub 780 switched between an operation for generating an auxiliary driving force and a regenerating operation, in particular, a force may be more frequently applied or a larger force may be applied to the engaging hole section 790b of the motor housing 790. This configuration increases the possibility of damage, e.g., deformation on the engaging hole section 790b of the motor housing 790.

Since the motor 784 of the electric hub 780 generates a large amount of heat during driving, the heat is disadvantageously hard to properly dissipate to the outside. In the use of the motor 784 of the electric hub 780 switched between an operation for generating an auxiliary driving force and a regenerating operation, in particular, it is difficult to properly address this problem because of an increase in heat quantity.

The present invention has been devised to solve the problems. An object of the present invention is to provide an electric hub that can properly transmit a human driving force to a hub body without considerably increasing the length of a serration section in the axial direction.

The present invention has been devised to solve the problems. Another object of the present invention is to provide an electric hub that can prevent rainwater or the like from flowing into a hub body even if a bearing rotatably supporting the hub body is not capable of or is insufficiently capable of shielding the hub body.

The present invention has been devised to solve the problems. Still another object of the present invention is to provide an electric hub and an electric bicycle that can prevent rattles between a locking member and a motor housing and can prevent damage on the motor housing and properly dissipate heat from a motor to the outside even in the use of the motor switched between an operation for generating an auxiliary driving force and a regenerating operation.

### Solution to Problem

In order to solve the problems, an electric hub of the present invention is an electric hub including a human-driving-force transmitting wheel that receives a transmitted human driving force, a hub spindle fixed to a frame, a hub body rotatable relative to the hub spindle, and a motor provided in the hub body so as to rotate the hub body, the electric hub further including a serration coupling that transmits a human driving force from the human-driving-force transmitting wheel to the hub body, the serration coupling including an input serration section and an output serration section that are integrally formed, the input serration section receiving a human driving force from the human-driving-force transmitting wheel, the output serration section transmitting a human driving force to the hub body, the output serration section being larger in diameter than the input serration section, the hub body having a serration section formed that is shaped according to the output serration section.

With this configuration, when a human driving force from the human-driving-force transmitting wheel is transmitted to the hub body via the serration coupling, a human driving force applied per unit area to the serration section of the hub body from the output serration section can be smaller than that applied per unit area to the input serration section. This configuration allows the serration section of the hub body to properly receive a human driving force without extending the serration coupling in the axial direction, and can satisfactorily prevent the serration section of the hub body from being broken due to insufficient strength.

According to the present invention, the serration section of the hub body is formed in a recess section formed on the hub body. With this configuration, the hub body can be smaller in width than in the case where the serration section is formed on, for example, a boss protruded from the hub body.

The present invention further includes a freewheel for an external derailleur, the human-driving-force transmitting wheel being provided on the freewheel. This configuration can satisfactorily respond to the case where the width of the hub body cannot be increased by the provision of the freewheel for the external derailleur.

According to the present invention, the output serration section of the serration coupling is larger than or equal in diameter to a cylinder where the human-driving-force transmitting wheel of the freewheel is attached. With this configuration, a human driving force applied per unit area to the serration section of the hub body can be smaller than in the case where the output serration section of the serration coupling is smaller in diameter than the cylinder. This configuration can more satisfactorily prevent the serration section of the hub body from being broken due to insufficient strength.

The present invention further includes an unshielded bearing that rotatably supports the hub body; and a grease holding section being capable of holding grease, the grease holding section being formed in the hub body so as to hold grease in a location facing at least one bearing rotatably supporting the hub body.

With this configuration, even if rainwater travels into the electric hub along the outer periphery of the hub spindle, the grease held by the grease holding section can prevent the rainwater from passing through the grease holding section. Thus, even if the bearing rotatably supporting the hub body is not capable of or is insufficiently capable of shielding the hub body, rainwater can be properly prevented from passing through the grease holding section.

According to the present invention, the hub spindle is inserted into a through hole formed on the hub body and then into the hub body from the outside, the rotating shaft of the motor and the hub body are interlocked via a reduction mechanism provided in the hub body, the reduction mechanism includes a sun gear formed on the rotating shaft, an annular gear provided in the hub body, and a rotatable planetary gear engaged with the sun gear and the annular gear, the planetary gear is supported by a support member provided on the motor, the support member has a recess section that faces the through hole in the axial direction of the hub spindle, and the grease holding section is a space facing the recess section.

This configuration can hold grease without increasing the dimension of the hub body in the width direction (the axial direction of the hub spindle). Thus, the electric hub can have a compact configuration.

According to the present invention, the bearing is a thrust needle roller bearing. With this configuration, a force can be properly received in a thrust direction; meanwhile, the dimension of the bearing can be smaller along the axial direction of the hub spindle as compared with the case where the bearing is a cup and cone bearing. Thus, the dimension of the hub body can be reduced in the width direction (the axial direction of the hub spindle), allowing the electric hub to have a compact configuration.

According to the present invention, the grease holding section is formed behind the bearing in the axial direction of the hub spindle. This configuration can reduce the possibility of an inflow of water into the grease holding section, achieving higher reliability as compared with the case where the grease holding section is disposed in the same position as the bearing or in front of the bearing in the axial direction of the hub spindle.

According to the present invention, the bearing has a bearing ring, and grease is also applied between the bearing ring and the installation point of the bearing. With this configuration, even if the rotation of the bearing deteriorates, the bearing ring rotates so as to prevent wearing of the hub body having the bearing, achieving higher reliability.

The present invention further includes a freewheel for an external derailleur. This configuration is highly applicable to the case where the provision of the freewheel for the external derailleur prevents an increase in the width of the hub body.

The present invention further includes a motor housing having a fixed motor stator and an engaged hub spindle, and a locking member that is fit onto the hub spindle, is engaged with the frame, and is attached so as not to rotate about the axis of the hub spindle. The locking member and the motor housing in contact with each other are fixed with a screw.

The present invention is particularly suitable for the case where the used motor is switched between an operation for generating an auxiliary driving force to be applied to a wheel and a regenerating operation for generating electric power according to a force from the wheel, or the hub spindle is composed of right and left hub spindles, and a rotating shaft that rotates about the same axis as the hub spindles is disposed between the hub spindles. Moreover, the electric hub is preferably used for an electric bicycle.

With this configuration, the locking member and the motor housing in contact with each other are fixed with the screw, thereby preventing rattles between the locking member and the motor housing. Since the locking member engaged with the frame is directly fixed to the motor housing, a force applied to an engaging section between the hub spindle and the motor housing can be reduced. Even if the used motor is switched between an operation for generating an auxiliary driving force and a regenerating operation, damage to the motor housing can be prevented. Furthermore, heat applied to the motor housing is directly transmitted to the locking member and thus heat from the motor can be properly dissipated to the outside.

In the electric hub of the present invention, the locking member has a wire drawing notch section where a connecting wire connected to the motor is guided to the outside, the wire drawing notch section being formed in a location other than a screw insertion hole section for the insertion of the screw in side view. With this configuration, the locking member can be suitably fixed to the motor housing while the connecting wire connected to the motor is guided to the outside through the wire drawing notch section.

In the electric hub of the present invention, the locking member has an engaging section that regulates a circumferential rotation relative to the frame while being engaged with an engaged section formed on the frame, and the wire drawing notch section is formed in a location overlapping the engaging section on the locking member in side view. With this configuration, a wire section connected to the motor can be properly drawn to a location other than the frame. Specifically, the engaged section of the frame engaged with the locking member is formed in a location so as to extend opposite to the installation location of the frame. The wire section is drawn to the outside through the wire drawing notch section formed in the location overlapping the engaging section on the locking member. This configuration can properly prevent the wire section from interfering with the frame.

### Advantageous Effects of Invention

According to the present invention, in the serration coupling that transmits a human driving force from the human-driving-force transmitting wheel to the hub body, the input serration section that receives a human driving force and the output serration section that transmits a human driving force to the hub body are integrally formed. The output serration section is larger in diameter than the input serration section. Thus, a human driving force applied per unit area to the serration section of the hub body from the output serration section can be smaller than a human driving force applied per unit area to the input serration section. This allows the serration section of the hub body to properly receive a human driving force without extending the serration coupling in the axial direction. Even if an aluminum material having relatively low strength is used for the hub body, the serration section of the hub body can be prevented from being broken due to insufficient strength, thereby improving reliability. Since the serration coupling does not need to be extended in the axial direction, the electric hub can be kept compact.

The serration section of the hub body is formed in the recess section formed on the hub body. This can reduce the width of the hub body as compared with the case where the serration section is formed on, for example, the boss protruded from the hub body. Thus, the electric hub can be further kept compact.

Even if the provision of the freewheel for the external derailleur prevents an increase in the width of the hub body, the configuration is properly adopted without problems. Moreover, the diameter of the output serration section of the serration coupling is equal to or larger than that of the cylinder where the human-driving-force transmitting wheel of the freewheel is attached. This configuration can more satisfactorily prevent the serration section of the hub body from being broken due to insufficient strength.

According to the present invention, the grease holding section being capable of holding grease is formed in the hub body so as to hold grease in the location facing at least one bearing rotatably supporting the hub body. With this configuration, even if rainwater travels into the electric hub along, for example, the outer periphery of the hub spindle, the grease held by the grease holding section can prevent the rainwater from passing through the grease holding section. Thus, even if the bearing rotatably supporting the hub body is not capable of or is insufficiently capable of shielding the hub body, high waterproofness can be obtained so as to improve reliability. The bearing rotatably supporting the hub body may be an unshielded bearing, which hardly limits the installation space and so on, leading to higher design freedom.

The recess section facing the through hole in the direction of the axis of the hub spindle is formed on the support member that supports the planetary gears of the reduction mechanism, and the grease holding section is the space that faces the recess section. This can hold the grease without increasing the dimension of the hub body in the width direction (in the direction of the axis of the hub spindle), thereby reducing the size of the electric hub in the width direction.

Since the bearing is the thrust needle roller bearing, a force can be properly received in the thrust direction; meanwhile, the width dimension of the bearing (the width dimension of the hub body) can be smaller along the axial direction of the hub spindle as compared with the case where the bearing is a cup and cone bearing. Thus, the electric hub can have a compact configuration in the width direction.

The grease holding section is formed behind the bearing in the axial direction of the hub spindle. This configuration can reduce the possibility of an inflow of water into the grease holding section, achieving higher reliability.

The bearing has the bearing ring and grease is also applied between the bearing ring and the installation point of the bearing. With this configuration, even if the rotation of the bearing deteriorates, the bearing ring rotates so as to prevent wearing of the hub body having the bearing, achieving higher reliability.

The present invention is also highly applicable to the case where the provision of the freewheel for the external derailleur prevents an increase in the width of the hub body.

According to the present invention, the locking member and the motor housing in contact with each other are fixed with the screw. The locking member is fit onto the hub spindle for fixation and is engaged with the frame. This configuration can prevent rattles between the locking member and the motor housing so as not to apply a load caused by rattles, achieving higher reliability. Moreover, the locking member engaged with the frame is directly fixed to the motor housing, thereby reducing a force applied to the engaging section between the hub spindle and the motor housing. Thus, even if the used motor is switched between an operation for generating an auxiliary driving force and a regenerating operation, damage to the motor housing can be prevented so as to achieve higher reliability. Heat applied to the motor housing is directly transmitted to the locking member, thereby properly dissipating heat from the motor to the outside.

The locking member has the wire drawing notch section where the connecting wire connected to the motor is guided to the outside, the wire drawing notch section being formed in the location other than a screw insertion hole section for the insertion of the screw in side view. With this configuration, the locking member can be suitably fixed to the motor housing while the connecting wire connected to the motor is guided to the outside through the wire drawing notch section.

The locking member has the engaging section that regulates a circumferential rotation relative to the frame while being engaged with the engaged section formed on the frame, and the wire drawing notch section is formed in the location overlapping the engaging section on the locking member. With this configuration, the wire section connected to the motor can be properly drawn to the location other than the frame.

### Brief Description of Drawings

[FIG. 1] FIG. 1 is an overall side view of an electric bicycle according to an embodiment of the present invention.
[FIG. 2] FIG. 2 is a side view of an electric hub for the electric bicycle and a point near the electric hub.
[FIG. 3] FIG. 3 is a cross-sectional view of the electric hub.
[FIG. 4] FIG. 4 is a partial enlarged cross-sectional view of the electric hub.
[FIG. 5] FIG. 5 is a partial enlarged cross-sectional view of the electric hub.
[FIG. 6] FIG. 6 is an exploded perspective view of the electric hub.
[FIG. 7] FIG. 7 is an exploded perspective view of the electric hub.
[FIG. 8] FIG. 8 is an overall side view of an electric bicycle according to another embodiment of the present invention.
[FIG. 9] FIG. 9 is a side view of an electric hub for the electric bicycle and a point near the electric hub.
[FIG. 10] FIG. 10 is a cross-sectional view of the electric hub.
[FIG. 11] FIG. 11 is a partial cross-sectional view of the electric hub.
[FIG. 12] FIG. 12 is a partial cross-sectional view of the electric hub.
[FIG. 13] FIG. 13 is a partial enlarged cross-sectional view of the electric hub.
[FIG. 14] FIG. 14 is an overall side view of an electric bicycle according to the embodiment of the present invention.
[FIG. 15] FIG. 15 is a side view of an electric hub for the electric bicycle and a point near the electric hub.
[FIG. 16] FIG. 16 is a cross-sectional view of the electric hub.
[FIG. 17] FIG. 17 is a partial enlarged cross-sectional view of the electric hub.
[FIG. 18] FIG. 18 is a partial enlarged cross-sectional view of the electric hub.
[FIG. 19] FIGS. 19(a) and 19(b) are partial enlarged cross-sectional views of one locking member of the electric hub and a point near the locking member, FIG. 19(a) is a cross-sectional view taken along the arrows VIa-VIa of FIG. 18, and FIG. 19(b) is a cross-sectional view taken along the arrows VIb-VIb of FIG. 18.
[FIG. 20] FIGS. 20(a) to 20(e) show the locking member of the electric hub, FIGS. 20(a) and 20(b) are perspective views, FIG. 20(c) is a front view, FIG. 20(d) is a side view, and FIG. 20(c) is a rear view.
[FIG. 21] FIG. 21 is a perspective view of a wire holding member for the electric hub.
[FIG. 22] FIG. 22 is a cross-sectional view of a conventional electric hub.
[FIG. 23] FIG. 23 is a cross-sectional view of another conventional electric hub.
[FIG. 24] FIG. 24(a) is a cross-sectional view taken along the arrows Xa-Xa of FIG. 23 and FIG. 24(b) is a cross-sectional view taken along the arrows Xb-Xb of FIG. 23 .

### Description of Embodiments

Embodiments of the present invention will be described below in accordance with the accompanying drawings.

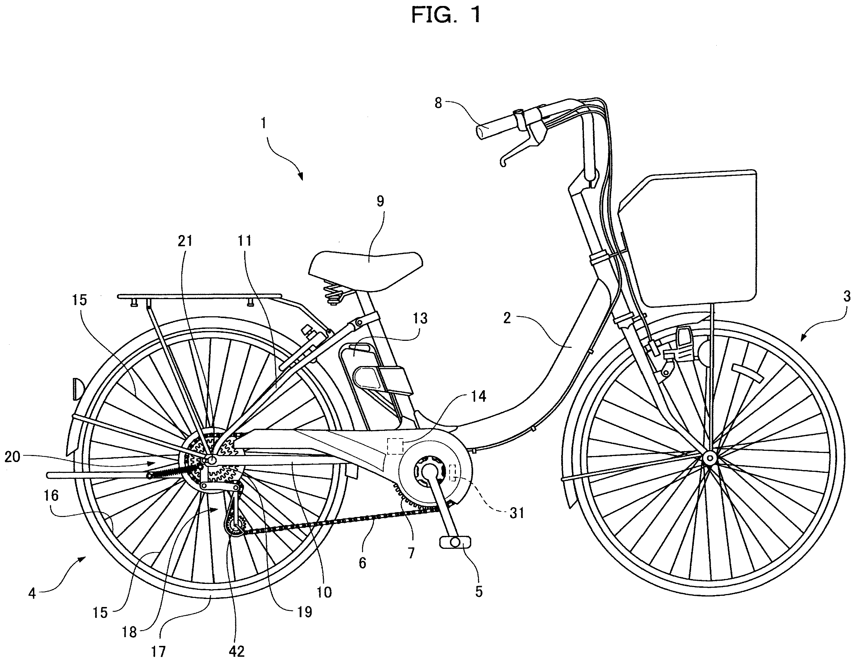

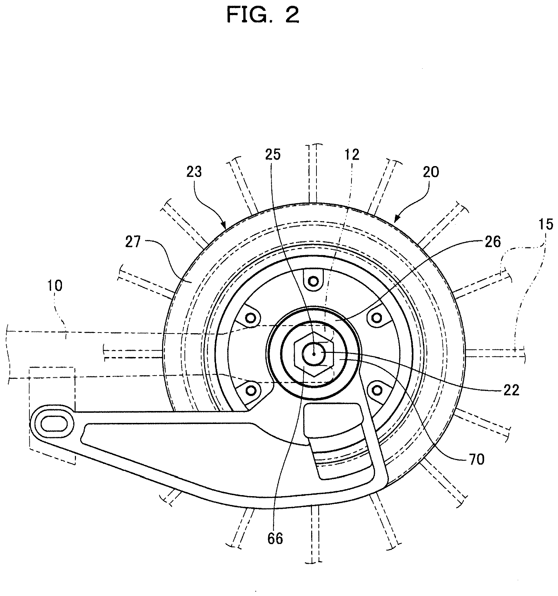

In FIG. 1, reference numeral 1 denotes an electric bicycle. The electric bicycle 1 includes a frame 2, a front wheel 3 and a rear wheel 4 that are provided on the frame 2, a pedal 5 that receives a human driving force (the pedal force of a user), a chain 6 serving as a driving force transmitting chain that transmits a human driving force to the rear wheel 4, a crank gear 7 that transmits a human driving force to the chain 6, a handlebar 8, an external derailleur 18, a saddle 9, a battery 13, a detector 31 that detects a human driving force applied to the pedal 5, and a control unit 14. The frame 2 includes a chain stay 10 and a seat stay 11. As shown in FIG. 2, the rear end of the chain stay 10 has a fork-end rear claw 12. As shown in FIG. 1, the external derailleur 18 has a rear derailleur 42 and a multistage freewheel 19. The rear wheel 4 has an electric hub 20 disposed at the center of the rear wheel 4, a plurality of spokes 15 extended in the radial direction of the rear wheel 4 from the electric hub 20, a rim 16 where the outer ends of the spokes 15 are attached, and a tire 17 attached to the outer periphery of the rim 16.

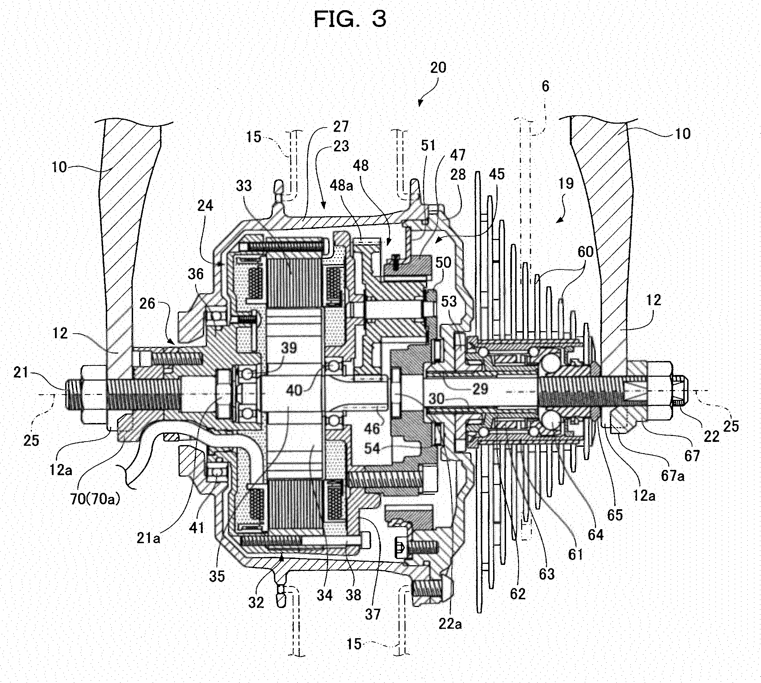

As shown in FIGS. 2 and 3, and so on, the electric hub 20 has a pair of right and left hub spindles 21 and 22 for fixation on the rear claw 12, a hub body 23 rotatable relative to the hub spindles 21 and 22, and a motor 24 that is disposed in the hub body 23 so as to rotate the hub body 23.

As shown in FIGS. 3 to 5, the motor 24 is a brushless motor including a motor housing 32, a stator 33 that is fixed in the motor housing 32 and is covered with resin, a rotor 34 rotatably provided inside the stator 33, and a rotating shaft 35 inserted at the center of the rotor 34. The control unit 14 causes the motor 24 to generate an auxiliary driving force according to a pedal force detected by the detector 31. Power may be generated by the control unit 14 according to a rotary force from the rear wheel 4, and the power generation may be switched to a regenerating operation for charging the battery 13.

The rotating shaft 35 of the motor 24 is located between the hub spindles 21 and 22. The hub spindles 21 and 22 and the rotating shaft 35 are disposed on an axis 25. The motor housing 32 includes a housing body 36 (left side in FIG. 3) and a housing body 37 (right side in FIG. 3) that are separated in the direction of the axis 25 of the rotating shaft 35. The stator 33 is interposed between the housing bodies 36 and 37 that are connected with a plurality of screws 38. The rotating shaft 35 and the rotor 34 are rotatably supported by bearings 39 and 40 disposed near the center of the housing bodies 36 and 37.

The hub body 23 includes a substantially cylindrical body member 27 having an opening 26 on one end side (left side in FIG. 3) in the direction of the axis 25 of the hub spindles 21 and 22, a disc-like cover member 28 that closes another end side (right side in FIG. 3) of the body member 27, a through hole 29 formed at the center of the cover member 28, and a cylindrical fitting 30 that is inserted into the through hole 29, is screwed to be joined to the cover member 28, and is rotatably fit onto the hub spindle 22. For example, the body member 27 and the cover member 28 are made of an aluminum alloy.

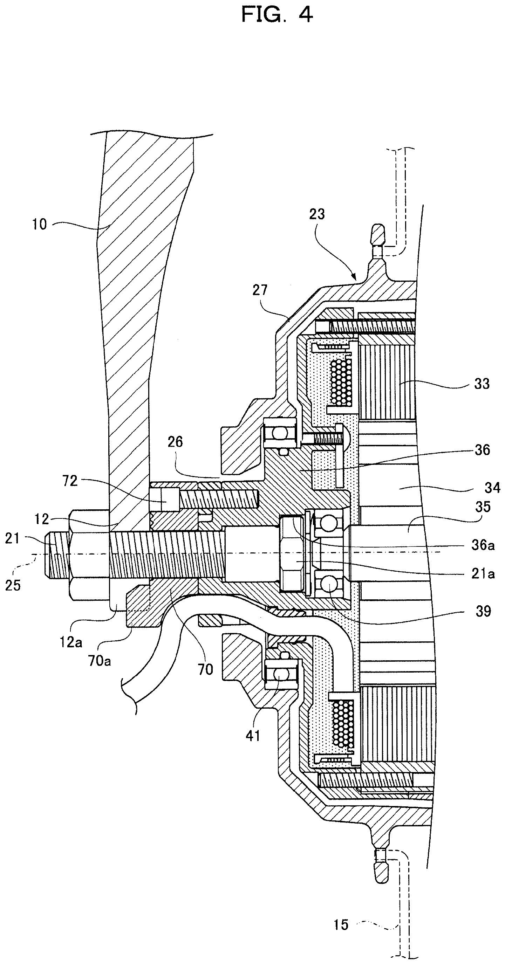

One end (left end in FIG. 3) of the body member 27 of the hub body 23 is rotatably supported by the housing body 36 via a bearing 41. As shown in FIGS. 3 and 4, the hub spindle 21 has an engaging section 21a that is formed on an end inserted into the motor 24, the engaging section 21a extending outward in the radial direction (hexagonally in the present embodiment) of the hub spindle 21. The engaging section 21a is fit into and engaged with an engaging hole section 36a shaped like a hexagonal hole formed in the housing body 36. With this configuration, the housing body 36 and the hub spindle 21 are assembled while being restrained so as not to rotate about the axis 25.

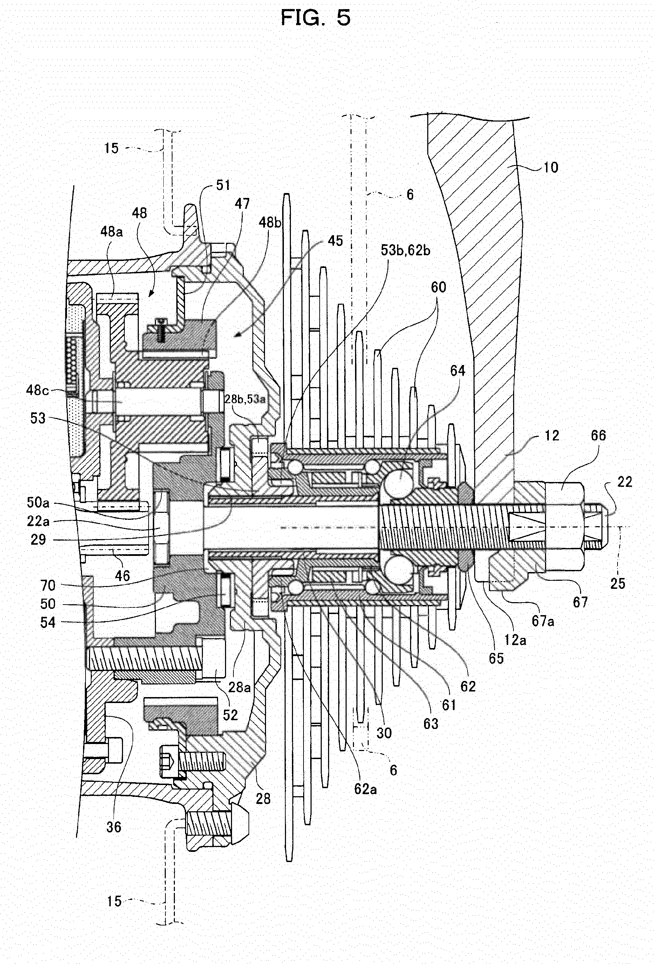

As shown in FIGS. 3 and 5, the other hub spindle 22 is inserted into the fitting 30 and enters the hub body 23 from the outside. The hub spindle 22 has an engaging section 22a on an end inserted into the motor 24, the engaging section 22a extending outward in the radial direction (hexagonally in the present embodiment) of the hub spindle 22. The engaging section 22a is fit into and engaged with an engaging hole section 50a shaped like a hexagonal hole formed on a support frame 50 attached to the other housing body 37 via a screw 52. With this configuration, the support frame 50 and the other hub spindle 22 are assembled while being restrained so as not to rotate about the axis 25.

As shown in FIGS. 3 and 5, the rotating shaft 35 and the hub body 23 of the motor 24 are interlocked with each other via a reduction mechanism 45 that is provided adjacent to the motor 24 in the hub body 23. The reduction mechanism 45 includes a sun gear 46 formed on an end of the rotating shaft 35, an annular internal gear 47 (an example of an annular gear) attached inside the cover member 28 via a connecting member 51, and a plurality of planetary gears 48 rotatably engaged with the sun gear 46 and the internal gear 47. One end of the planetary gear 48 is supported by the other housing body 37 of the motor 24 while another end of the planetary gear 48 is supported by the support frame 50 attached to the other housing body 37.

The planetary gear 48 has a large gear section 48a and a small-diameter gear section 48b that are formed into a single section, and a support shaft section 48c that rotatably supports the large gear section 48a and the small gear section 48b. The large gear section 48a of the planetary gear 48 is engaged with the sun gear 46 while the internal gear 47 is engaged with the small gear section 48b of the planetary gear 48. Thus, the rotation speed of the rotating shaft 35 of the motor is reduced, that is, a torque is increased, and an auxiliary driving force is transmitted to the hub body 23 so as to interlock the hub body 23. A thrust bearing 54 is disposed between the cover member 28 and the support frame 50 so as to receive a force applied from the support frame 50 along the axis 25.

As has been discussed, the external derailleur 18 is attached to the rear wheel 4. The external derailleur device 18 includes the rear derailleur 42 (FIG. 1) and the multistage freewheel 19. As shown in FIGS. 3 and 5, the freewheel 19 outside the hub body 23 is rotatably fit onto the other hub spindle 22. The freewheel 19 includes a plurality of sprockets 60 serving as human-driving-force transmitting wheels that are selectively engaged with the chain 6 to receive a human driving force from the chain 6, a cylindrical outer body 61 having the sprockets 60, a cylindrical inner body 62 that is rotatably provided in the outer body 61 via a bearing, and a one-way clutch 63 that is provided between the outer body 61 and the inner body 62 and transmits a turning force only to the hub body 23 from the sprockets 60. The inner body 62 and the fitting 30 are engaged with each other in the circumferential direction (rotation direction). The inner body 62 and the outer body 61 are made of sufficiently rigid metals such as chromium-molybdenum steel.

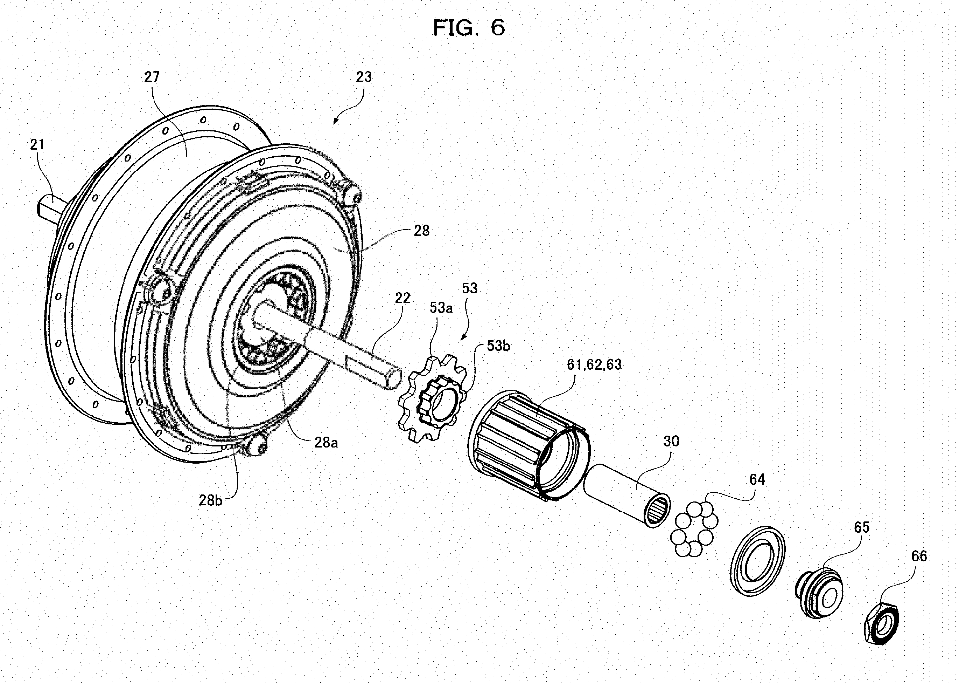

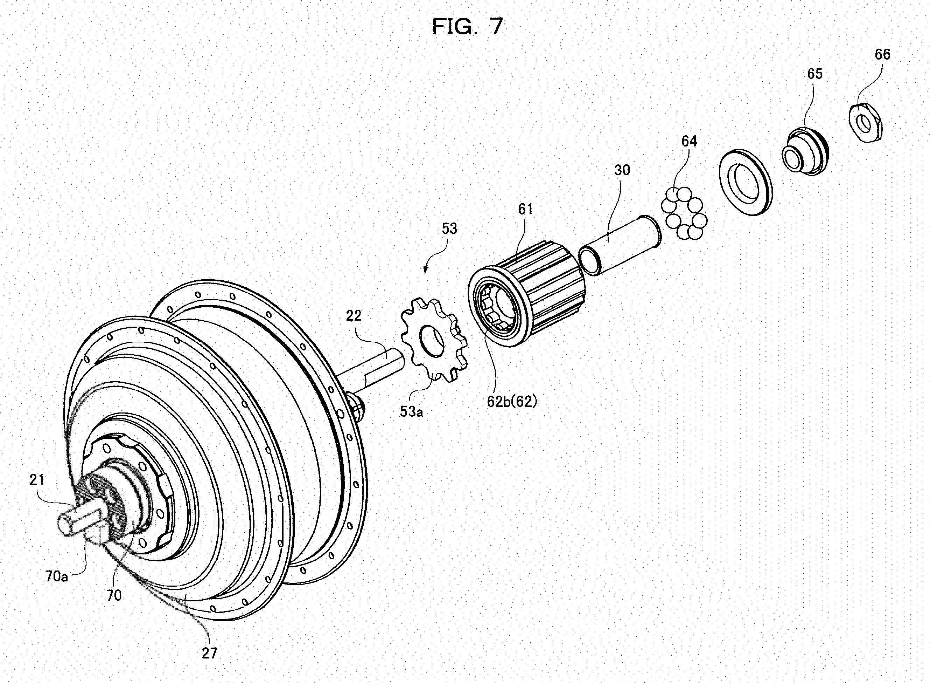

As shown in FIGS. 5 to 7, a serration coupling 53 that transmits a human driving force to the hub body 23 from the sprockets 60 is provided between the cover member 28 and the inner body 62. The serration coupling 53 includes a pair of serration sections 53a and 53b having substantially sawtooth portions. The serration coupling 53 is made of an alloy having sufficient strength. The input serration section 53b that receives a human driving force from the inner body 62 and the output serration section 53a that transmits a human driving force to the hub body 23 are integrally formed. The output serration section 53a is larger in diameter than the input serration section 53b. In the present embodiment, the diameter of the output serration section 53a is larger than that of the outer body 61 (the diameter of a fitting for the sprockets 60) that is a cylindrical body having the sprockets 60 of the freewheel 19. The output serration section 53a may be identical in diameter to the outer body 61 (the fitting for the sprockets 60).

In the serration coupling 53, the input serration section 53b is fit into a serration section 62b formed inside a large-diameter section 62a on one end of the inner body 62. The output serration section 53a is formed near the center of the cover member 28 and is fit into a serration section 28b that is formed in a recess section 28a formed inward from the side of the motor 24. Moreover, a force is properly transmitted from the inner body 62 to the cover member 28.

The outer body 61 contains a bearing body 64 that rotatably supports the outer body 61. Reference numeral 65 denotes a locknut for locking balls provided in the bearing body 64.

The inner ends of the spokes 21 of the rear wheel 4 are connected to the outer periphery of the hub body 23. The hub spindles 21 and 22 are each inserted into a groove 12a formed on the rear claw 12 of the chain stay 10. A nut 66 is screwed onto each of the hub spindles 21 and 22, attaching the rear wheel 4 with the electric hub 20 between the chain stays 10.

As shown in FIG. 5, a metallic locking member 67 is provided between the nut 66 and the rear claw 12 of the chain stay 10 near the freewheel 19. The locking member 67 restrains the other hub spindle 22 so as not to rotate the hub spindle 22 about the axis 25. The locking member 67 includes a protrusion 67a that serves as an integrated engaging section. The protrusion 67a is fit into the groove 12a of the rear claw 12, engaging the locking member 67 with the rear claw 12 so as not to rotate the locking member 67 about the direction of the axis 25.

As shown in FIG. 4, a locking member 70 is provided in contact with the rear claw 12 also on the chain stay 10 where the freewheel 19 is not provided. The locking member 70 also has a protrusion 70a serving as an engaging section that is fit into and engaged with the groove 12a serving as an engaged section formed on the rear claw 12. The protrusion 70a is fit into the groove 12a of the rear claw 12, engaging the locking member 70 with the rear claw 12 so as not to rotate the locking member 70 about the direction of the axis 25. The locking member 70 is fixed in direct contact with the housing body 36 by a screw 72.

With this configuration, when a user rides the electric bicycle 1, a human driving force (pedal force) applied to the pedal 7 is detected by the detector 31 and is transmitted to the freewheel 19 via the chain 6 so as to rotate the freewheel 19. The rotation of the freewheel 19 is transmitted from the outer body 61 to the inner body 62 via the one-way clutch 63 and then is transmitted to the cover member 28 via the serration coupling 53. This integrally rotates the inner body 62, the fitting 30, the cover member 28, and the body member 27, allowing the hub body 23 to rotate about the axis 25.

The control unit 14 controls driving of the motor 24 according to a human driving force detected by the detector 31. At this point, the rotating shaft 35 rotates with the rotor 34, so that the hub body 23 rotating about the axis 25 is decelerated via the reduction mechanism 45. Thus, the rear wheel 4 is rotated by a combination of a human driving force applied to the pedal 7 and an auxiliary driving force applied from the motor 24 according to the human driving force.

In the presence of a regenerating function, the control unit 14 causes, for example, the motor 24 to perform a regenerating operation when braking or downhill riding is detected. Specifically, the hub body 23 is rotated in response to the rotation of the rear wheel 4, simultaneously rotating the rotating shaft 35 and the rotor 34 of the motor 24 via the reduction mechanism 45. Thus, power generated by the motor 24 is supplied to the battery 13 to charge the battery 13.

In this configuration, in the serration coupling 53 that transmits a human driving force from the sprockets 60 of the freewheel 19 to the hub body 23, the input serration section 53b that receives a human driving force and the output serration section 53a that transmits a human driving force to the hub body 23 are integrally formed. The output serration section 53a is larger in diameter than the input serration section 53b. Thus, a human driving force applied per unit area to the serration section 28b of the hub body 23 (cover member 28) from the output serration section 53a of the serration coupling 53 can be smaller than a human driving force applied per unit area to the input serration section 53b of the serration coupling 53.

This allows the serration section 28b of the hub body 23 (cover member 28) to properly receive a human driving force without extending the serration coupling 53 in the direction of the axis 25. Even if an aluminum material having lower strength than the serration coupling 53 is used for the hub body 23 to achieve light weight, the serration section 28b of the hub body 23 (cover member 28) can be prevented from being broken by insufficient strength, thereby improving reliability. Since the serration coupling 53 does not need to be extended in the direction of the axis 25, the electric hub 20 can be kept compact in the width direction.

The serration section 28b of the hub body 23 (cover member 28) is formed in the recess section 28a formed on the cover member 28. This can reduce the width of the hub body 23 as compared with the case where the serration section is formed on, for example, a boss laterally protruding from the cover member 28. Thus, the electric hub 20 can be further kept compact.

In the present embodiment, the freewheel 19 of the external derailleur 18 is provided in the electric hub 20. Thus, this configuration is particularly effective because it is significant to reduce the width of the hub body 23 (compact).

In this configuration, the diameter of the output serration section 53a of the serration coupling 53 is equal to or larger than that of the outer body 61 (the diameter of the fitting for the sprockets 60). This configuration can reduce a human driving force applied per unit area to the serration section 28b of the hub body 23 (cover member 28) as compared with the case where the output serration section 53a of the serration coupling 53 is smaller in diameter than the outer body 61. Thus, the serration section 28b of the hub body 23 (cover member 28) can be more properly prevented from being broken due to insufficient strength, leading to higher reliability of the electric bicycle 1 as well as the electric hub 20.

In the present embodiment, the external derailleur 18 is provided, but not exclusively. The configuration for the serration coupling 53 is similarly applicable even in the absence of the external derailleur 18. The electric bicycle 1 can perform a regenerating operation in the present embodiment but as a matter of course, the present invention is also applicable to an electric bicycle that does not perform a regenerating operation. Moreover, in the present embodiment, a human driving force is transmitted to the sprockets 60 serving as human-driving-force transmitting wheels via the chain serving as a driving force transmitting chain, but not exclusively. For example, the driving force transmitting chain may be a synchronous belt and the human-driving-force transmitting wheel engaged with the synchronous belt may be a gear wheel.

As shown in FIG. 5, the bearing 54 that rotatably supports the hub body 23 is disposed between the cover member 28 of the hub body 23 and the support member 50 of the reduction mechanism 45. The bearing 54 is composed of an unshielded thrust needle roller bearing (thrust bearing) including a pair of bearing rings and a needle roller disposed between the bearing rings. The thrust bearing can receive a force applied from the support member 50 along the axis 25.

In the present embodiment, rainwater may flow into a location facing the bearing 54, that is, a location radially inward from the bearing 54 from the outside of the electric hub 20. A grease holding section capable of holding watertight grease is preferably formed in this location so as to hold the grease in the grease holding section. In this case, it is preferable that a recess section is formed so as to oppose the through hole 22a where the hub spindle 22 is inserted in the support member 50 and the grease holding section is a space that faces the recess section. The grease holding section is formed behind the bearing 54 in the direction of the axis 25 of the hub spindle 22.

Furthermore, grease (not shown) is preferably filled between the bearing rings of the bearing 54 and the installation point of the bearing 54, specifically, between one of the bearing rings and the cover member 28 and between the other bearing ring and the support member 50.

With this configuration, even if rainwater flows into the electric hub 20 along the outer periphery of the hub spindle, the grease held by the grease holding section can prevent rainwater from flowing through the grease holding section.

In addition to this configuration, as shown in FIGS. 3 and 4, a wire drawing notch section where a connecting wire connected to the motor 24 is guided to the outside is preferably formed in a location other than a screw insertion hole section for insertion of the screw 72 in side view in the locking member 70. As has been discussed, the locking member 70 preferably has the protrusion 70a that is engaged with the groove 12a of the rear claw 12 of the chain stay 10 serving as a frame, and the wire drawing notch section is preferably formed in a location overlapping the protrusion 70a serving as the engaging section of the locking member 70 in side view.

This configuration can prevent rattles between the locking member 70 and the motor housing 32 so as not to apply a load caused by rattles, achieving higher reliability. Moreover, the locking member 70 engaged with the chain stay 10 is directly fixed to the motor housing 32, thereby reducing a force applied to an engaging section between the hub spindle 21 and the motor housing 32. Thus, even if the used motor is switched between an operation for generating an auxiliary driving force and a regenerating operation, damage to the motor housing 32 can be prevented so as to achieve higher reliability. Heat applied to the motor housing 32 is directly transmitted to the locking member 70, thereby properly dissipating heat from the motor to the outside.

Another embodiment of the present invention will be described below with reference to the accompanying drawings. The present embodiment relates to an embodiment specifically describing the grease holding section formed so as to hold grease in the location facing, in the hub body, at least one of the bearings that rotatably support the hub body.

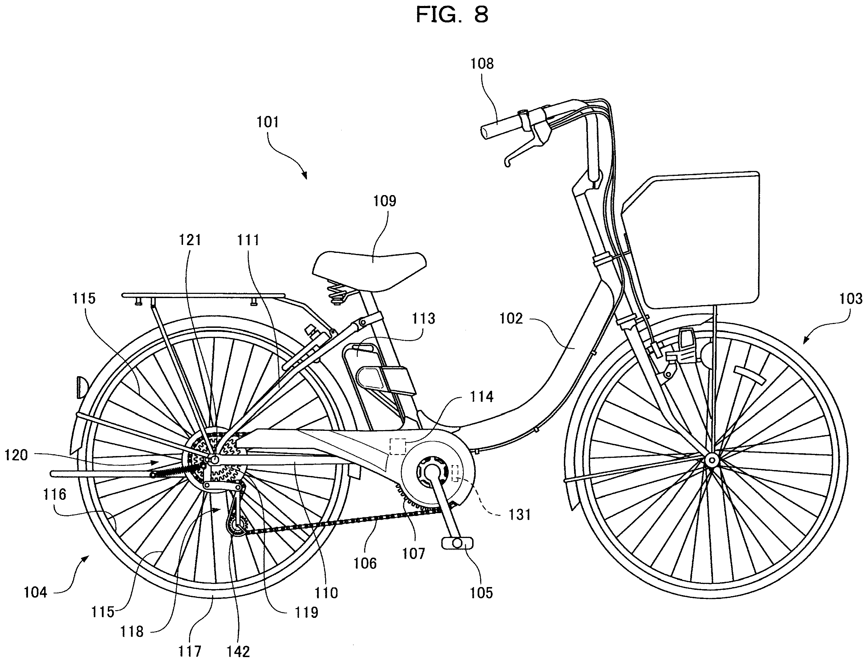

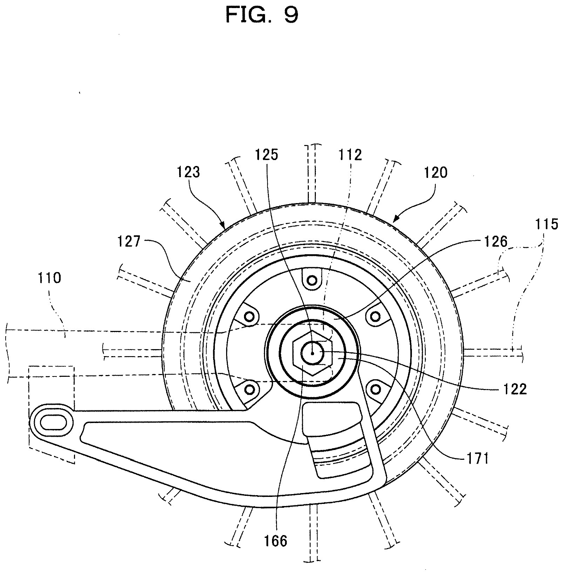

In FIG. 8, reference numeral 101 denotes an electric bicycle. The electric bicycle 101 includes a frame 102, a front wheel 103 and a rear wheel 104 that are provided on the frame 102, a pedal 105 that receives a human driving force (the pedal force of a user), a chain 106 serving as a driving force transmitting chain that transmits a human driving force to the rear wheel 104, a crank gear 107 that transmits a human driving force to the chain 106, a handlebar 108, an external derailleur 118, a saddle 109, a battery 113, a detector 131 that detects a human driving force applied to the pedal 105, and a control unit 114. The frame 102 includes a chain stay 110 and a seat stay 111. As shown in FIG. 9, the rear end of the chain stay 110 has a fork-end rear claw 112. As shown in FIG. 8, the external derailleur 118 has a rear derailleur 142 and a multistage freewheel 119. The rear wheel 14 has an electric hub 120 disposed at the center of the rear wheel 104, a plurality of spokes 115 extended in the radial direction of the rear wheel 104 from the electric hub 120, a rim 116 where the outer ends of the spokes 115 are attached, and a tire 117 attached to the outer periphery of the rim 116.

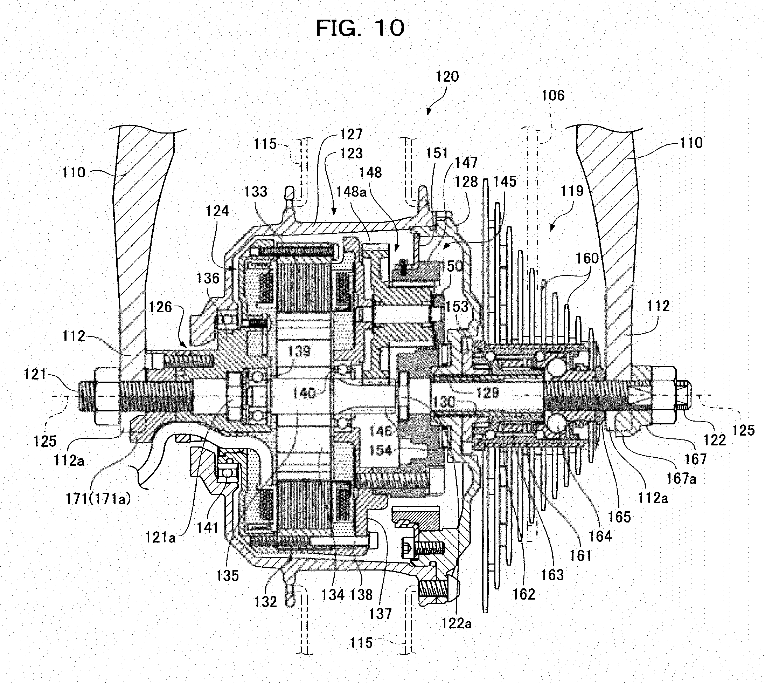

As shown in FIGS. 9, 10, and so on, the electric hub 120 has a pair of right and left hub spindles 121 and 122 for fixation on the rear claw 112, a hub body 123 rotatable relative to the hub spindles 121 and 122, and a motor 124 that is disposed in the hub body 123 so as to rotate the hub body 123.

As shown in FIGS. 10 to 12, the motor 124 is a brushless motor including a motor housing 132, a stator 133 that is fixed in the motor housing 132 and is covered with resin, a rotor 134 rotatably provided inside the stator 133, and a rotating shaft 135 inserted at the center of the rotor 134. The control unit 114 causes the motor 124 to generate an auxiliary driving force according to a pedal force detected by the detector 131. Power may be generated by the control unit 114 according to a rotary force from the rear wheel 104, and the power generation may be switched to a regenerating operation for charging the battery 113.

The rotating shaft 135 of the motor 124 is located between the hub spindles 121 and 122. The hub spindles 121 and 122 and the rotating shaft 135 are disposed on the same axis 125. The motor housing 132 includes a housing body 136 (left side in FIG. 10) and a housing body 137 (right side in FIG. 10) that are separated in the direction of the axis 125 of the rotating shaft 135. The stator 133 is interposed between the housing bodies 136 and 137 that are connected with a plurality of screws 138. The rotating shaft 135 and the rotor 134 are rotatably supported by bearings 139 and 140 disposed near the center of the housing bodies 136 and 137.

The hub body 123 includes a substantially cylindrical body member 127 having an opening 126 on one end side (left side in FIG. 10) in the direction of the axis 125 of the hub spindles 121 and 122, a disc-like cover member 128 that closes another end side (right side in FIG. 10) of the body member 127, a through hole 129 formed at the center of the cover member 128, and a cylindrical fitting 130 that is inserted into the through hole 129, is screwed to be joined to the cover member 128, and is rotatably fit onto the hub spindle 122. For example, the body member 127 and the cover member 128 are made of an aluminum alloy.

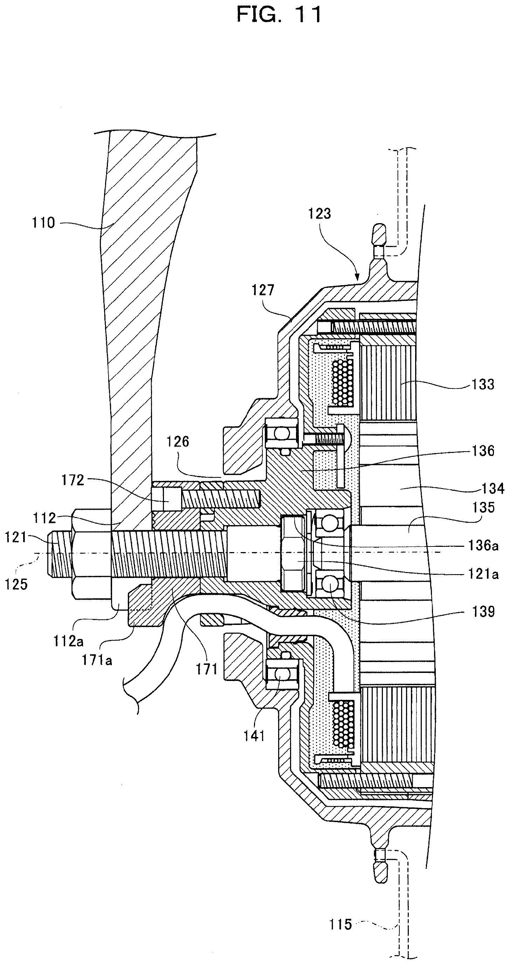

One end (left end in FIG. 10) of the body member 127 of the hub body 123 is rotatably supported by the housing body 136 via a bearing 141. As shown in FIGS. 10 and 11, the hub spindle 121 has an engaging section 121a that is formed on an end inserted into the motor 124, the engaging section 121a extending outward in the radial direction (hexagonally in the present embodiment) of the hub spindle 121. The engaging section 121a is fit into and engaged with an engaging hole section 136a shaped like a hexagonal hole formed in the housing body 136. With this configuration, the housing body 136 and the hub spindle 121 are assembled while being restrained so as not to rotate about the axis 125.

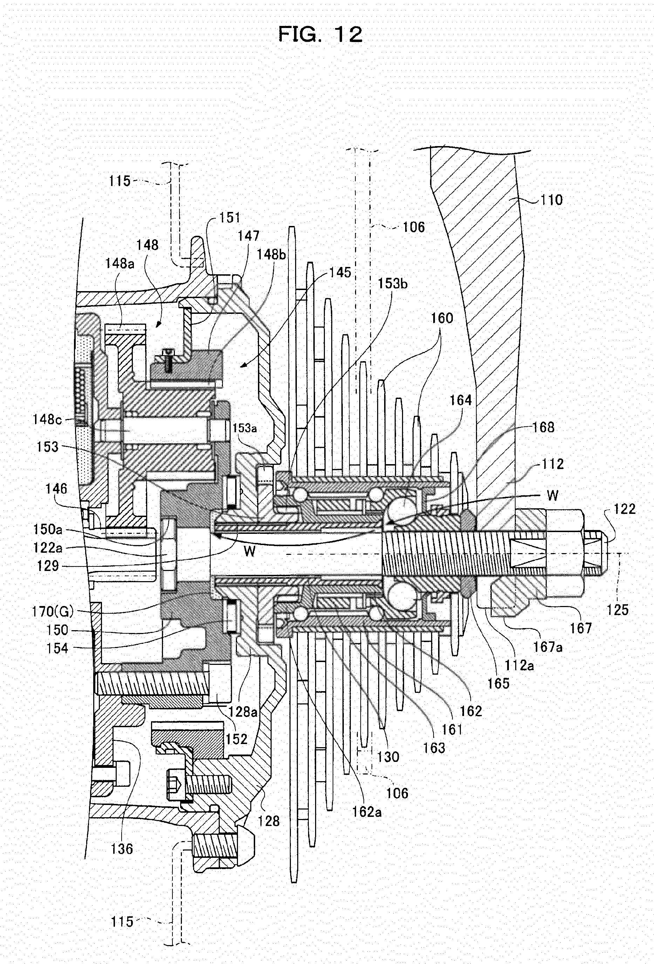

As shown in FIGS. 10 and 12, the hub spindle 122 is inserted into the fitting 130 and enters the hub body 123 from the outside. The hub spindle 122 has an engaging section 122a on an end inserted into the motor 124, the engaging section 122a extending outward in the radial direction (hexagonally in the present embodiment) of the hub spindle 122. The engaging section 122a is fit into and engaged with an engaging hole section 150a shaped like a hexagonal hole formed on a support member 150 attached to the housing body 137 via a screw 152. With this configuration, the support member 150 and the hub spindle 122 are assembled while being restrained so as not to rotate about the axis 125.

As shown in FIGS. 10 and 12, the rotating shaft 135 and the hub body 123 of the motor 124 are interlocked with each other via a reduction mechanism 145 that is provided adjacent to the motor 124 in the hub body 123. The reduction mechanism 145 includes a sun gear 146 formed on an end of the rotating shaft 135, an annular internal gear 147 (an example of an annular gear) attached inside the cover member 128 via a connecting member 151, and a plurality of planetary gears 148 rotatably engaged with the sun gear 146 and the internal gear 147. One end of the planetary gear 148 is supported by the other housing body 137 of the motor 124 while another end of the planetary gear 148 is supported by the support member 150 attached to the other housing body 137.

The planetary gear 148 has a large gear section 148a and a small-diameter gear section 148b that are formed into a single section, and a support shaft section 148c that rotatably supports the large gear section 148a and the small gear section 148b. The large gear section 148a of the planetary gear 148 is engaged with the sun gear 146 while the internal gear 147 is engaged with the small gear section 148b of the planetary gear 148. Thus, the rotation speed of the rotating shaft 135 of the motor is reduced, that is, a torque is increased, and an auxiliary driving force is transmitted to the hub body 123 so as to interlock the hub body 123.

As has been discussed, the external derailleur 118 is attached to the rear wheel 104. The external derailleur device 118 includes the rear derailleur 142 (FIG. 8) and the multistage freewheel 119. As shown in FIGS. 10 and 12, the freewheel 119 outside the hub body 123 is rotatably fit onto the other hub spindle 122. The freewheel 119 includes a plurality of sprockets 160 acting as human-driving-force transmitting wheels that are selectively engaged with the chain 106 to receive a human driving force from the chain 106, a cylindrical outer body 161 having the sprockets 160, a cylindrical inner body 162 that is rotatably provided in the outer body 161 via a bearing, and a one-way clutch 163 that is provided between the outer body 161 and the inner body 162 and transmits a turning force only to the hub body 123 from the sprockets 160. The inner body 162 and the fitting 130 are engaged with each other in the circumferential direction (rotation direction).

A serration coupling 153 that is a single section of large-diameter and small-diameter serration sections 153a and 153b is disposed between the cover member 128 and the inner body 162. The small-diameter serration section 153b of the serration coupling 153 is fit into one end of the inner body 162 while the large-diameter serration section 153a is fit into a boss 128a formed near the center of the cover member 128. This configuration properly transmits a force from the inner body 162 to the cover member 128.

The outer body 161 contains a bearing body 164 that rotatably supports the outer body 161. Reference numeral 165 denotes a locknut for locking balls provided in the bearing body 164. In the present embodiment, a sealer 168 (FIG. 12) is provided to minimize the inflow of dust, rainwater W, and so on from the vicinity of the locknut 165. The sealer 168 does not always need to be provided.

As shown in FIGS. 10, 12, and 13, a bearing 154 that rotatably supports the hub body 123 is disposed between the cover member 128 of the hub body 123 and the support member 150 of the reduction mechanism 145. The bearing 154 is composed of an unshielded thrust needle roller bearing (thrust bearing) including a pair of bearing rings 154a and a needle roller 154b disposed between the bearing rings 154a. The thrust bearing can receive a force applied from the support member 150 along the axis 125.

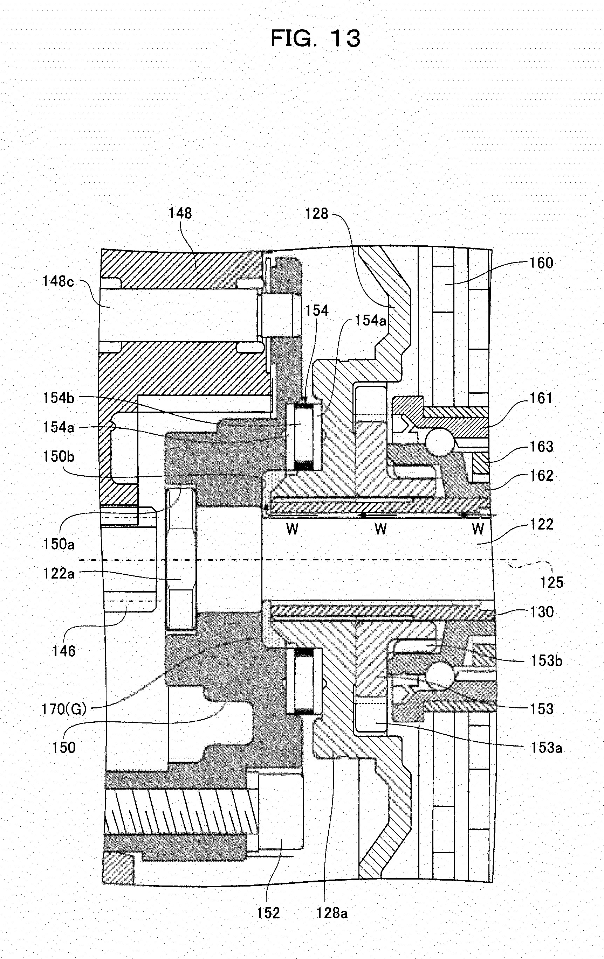

In the present embodiment, the rainwater W may flow into a location facing the bearing 154, that is, a location radially inward from the bearing 154 from the outside of the electric hub 120. As shown in FIG. 13, a grease holding section 170 capable of holding watertight grease G is formed in this location so as to hold the grease G in the grease holding section 170. In the present embodiment, a recess section 150b is formed so as to oppose the through hole 122a where the hub spindle 122 is inserted in the support member 150, and the grease holding section 170 is a space that faces the recess section 150b. The grease holding section 170 is formed behind the bearing 154 in the direction of the axis 125 of the hub spindle 122.

Furthermore, grease (not shown) is filled between the bearing rings 154a of the bearing 154 and the installation point of the bearing 154, specifically, between one of the bearing rings 154a and the cover member 128 and between the other bearing ring 154a and the support member 150.

As shown in FIG. 10, the inner ends of the spokes 115 of the rear wheel 104 are connected to the outer periphery of the hub body 123. Locking members 171 and 167 are assembled to the hub spindles 121 and 122. Protrusions 171a and 167a formed on the locking members 171 and 167 are fit into a groove 112a of the rear claw 112, engaging the locking members 171 and 167 with the rear claw 112 so as not to rotate the locking members 171 and 167 about the direction of the axis 125.

With this configuration, when a user rides the electric bicycle 101, a human driving force (pedal force) applied to the pedal 105 is detected by the detector 131 and is transmitted to the freewheel 119 via the chain 106 so as to rotate the freewheel 119. The rotation of the freewheel 119 is transmitted from the outer body 161 to the inner body 162 via the one-way clutch 163 and then is transmitted to the cover member 128 via the serration coupling 153. This integrally rotates the inner body 162, the fitting 130, the cover member 128, and the body member 127, allowing the hub body 123 to rotate about the axis 125.

The control unit 114 controls driving of the motor 124 according to a human driving force detected by the detector 131. At this point, the rotating shaft 135 rotates with the rotor 134 so as to decelerate the hub body 123 rotating about the axis 125 via the reduction mechanism 145. Thus, the rear wheel 104 is rotated by a combination of a human driving force applied to the pedal 105 and an auxiliary driving force applied from the motor 124 according to the human driving force.

In the presence of a regenerating function, the control unit 114 causes, for example, the motor 124 to perform a regenerating operation when braking or downhill riding is detected. Specifically, the hub body 123 is rotated in response to the rotation of the rear wheel 104, simultaneously rotating the rotating shaft 135 and the rotor 134 of the motor 124 via the reduction mechanism 145. Thus, power generated by the motor 124 is supplied to the battery 113 to charge the battery 113.

In the present configuration, the rainwater W may flow into the electric hub 120 from the location facing the bearing 154 in the hub body 123, more specifically, the location radially inward from the bearing 154 from the outside of the electric hub 120. The grease holding section 170 capable of holding the watertight grease G is formed in this location so as to hold the grease G in the grease holding section 170.

With this configuration, as shown in FIGS. 12 and 13, even if the rainwater W travels into the electric hub 120 along the outer periphery of the hub spindle 122 through the installation point of the sealer 168, the grease G held by the grease holding section 170 can prevent the rainwater from passing through the grease holding section 170. Thus, even if the bearing 154 rotatably supporting the hub body 123 is not capable of or is insufficiently capable of shielding the hub body, rainwater can be properly prevented from passing through the grease holding section 170, achieving higher reliability. The bearing 154 rotatably supporting the hub body 123 may be an unshielded bearing 154, which hardly limits the installation space and so on, leading to higher design freedom.

With this configuration, the recess section 150b facing the through hole 129 in the direction of the axis 125 of the hub spindle 122 is formed on the support member 150 that supports the planetary gears 148 of the reduction mechanism 145, and the grease holding section 170 is a space that faces the recess section 150b. This can hold the grease G without increasing the dimension of the hub body 123 in the width direction (in the direction of the axis 125 of the hub spindle 122), thereby reducing the size of the electric hub 120 in the width direction.

Since the bearing 154 is a thrust needle roller bearing, a force can be properly received in a thrust direction; meanwhile, the width dimension of the bearing 154 (the width dimension of the hub body 123) can be smaller along the axial direction of the hub spindle 122 as compared with the case where the bearing 154 is a cup and cone bearing. Advantageously, the electric hub 120 can have a compact configuration in the width direction.

The grease holding section 170 is formed behind the bearing 154 in the direction of the axis 125 of the hub spindle 122, reducing the possibility of an inflow of water into the grease holding section 170. This can achieve higher reliability.

Furthermore, grease is also filled between the bearing rings 154a of the bearing 154 and the installation point of the bearing 154 (the cover member 128 of the hub body 123 and the support member 150). Thus, even if the rotation of the bearing 154 deteriorates, the bearing rings 154a rotate so as to prevent wearing of the cover member 128 of the hub body 123, which contains the attached bearing 154, and the support member 150, further improving the reliability.

As has been discussed, the width dimension of the hub body 123 containing the bearing 154 can be minimized. Thus, even if the provision of the freewheel 119 of the external derailleur 118 makes it difficult to increase the width of the hub body 123 in the design, the width of the hub body 123 can be properly set.

In the present embodiment, the bearing 154 is, but not exclusively, a thrust needle roller bearing. The thrust needle roller bearing may be replaced with a cup and cone bearing or an unshielded bearing.

In the present embodiment, the bearing 154 is an unshielded bearing and the grease holding section 170 that holds the grease G is formed in the location facing the bearing 154, but not exclusively. In some cases, the other bearing that rotatably supports the hub body 123 may have a similar configuration.

The present embodiment described the provision of the external derailleur 118. The present invention is not limited to this configuration. As has been discussed, the configurations for the bearing 154 and the grease holding section 170 are similarly applicable even in the absence of the external derailleur 118. In the present embodiment, the electric bicycle 1 can perform a regenerating operation. As a matter of course, the present invention is also applicable to an electric bicycle that does not perform a regenerating operation. Furthermore, a human driving force is transmitted, but not exclusively, to the sprocket 160 serving as a human-driving-force transmitting wheel, via the chain serving as a driving force transmitting chain in the present embodiment. For example, the driving force transmitting chain may be a synchronous belt and the human-driving-force transmitting wheel engaged with the synchronous belt may be a gear wheel.

Still another embodiment of the present invention will be described below in accordance with the accompanying drawings. The present embodiment will more specifically describe configurations for the fixing method of a locking member fit onto a hub spindle and a motor housing.

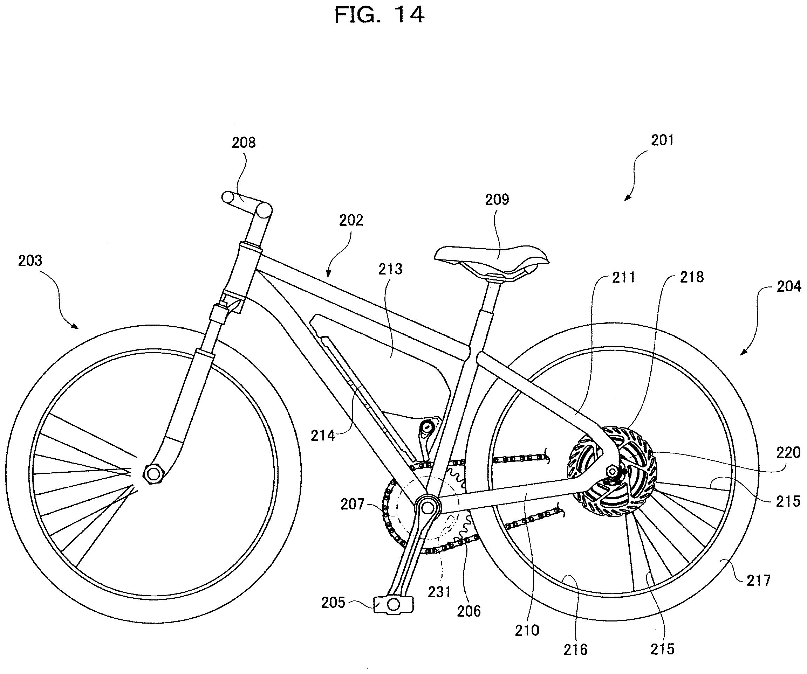

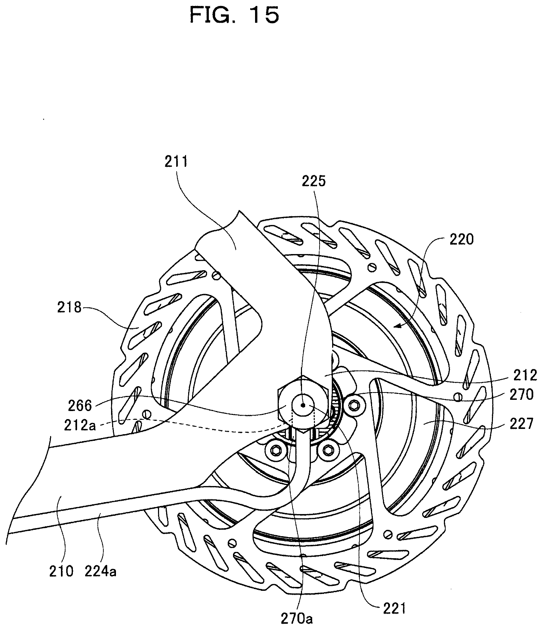

In FIG. 14, reference numeral 201 denotes an electric bicycle. The electric bicycle 201 includes a frame 202, a front wheel 203 and a rear wheel 204 that are provided on the frame 202, a pedal 205, a chain 206, a crank gear 207, a handlebar 208, a braking device, e.g., a disc braking device 218 including a brake lever (not shown), a saddle 209, a battery 213, a detector 231 that detects a pedal force applied to the pedal 205, and a control unit 214. The frame 202 includes a chain stay 210 and a seat stay 211. As shown in FIG. 15, the rear end of the chain stay 210 has a fork-end rear claw 212. The rear wheel 204 has an electric hub 220 disposed at the center of the rear wheel 204, a plurality of spokes 215 extended in the radial direction of the rear wheel 204 from the electric hub 220, a rim 216 where the outer ends of the spokes 215 are attached, and a tire 217 attached to the outer periphery of the rim 216. In the present embodiment, the disc braking device 218 is attached to the rear wheel 204. The configuration is not limited to one including the disc braking device 218. The provided disc braking device 218 may be replaced with other hub braking devices such as a band brake and a drum brake, a rim brake for braking with a friction force obtained by tightening the rim from both sides with brake shoe pads, or other braking devices. In FIGS. 14 and 15, only a braking disc is schematically shown as the disc braking device.

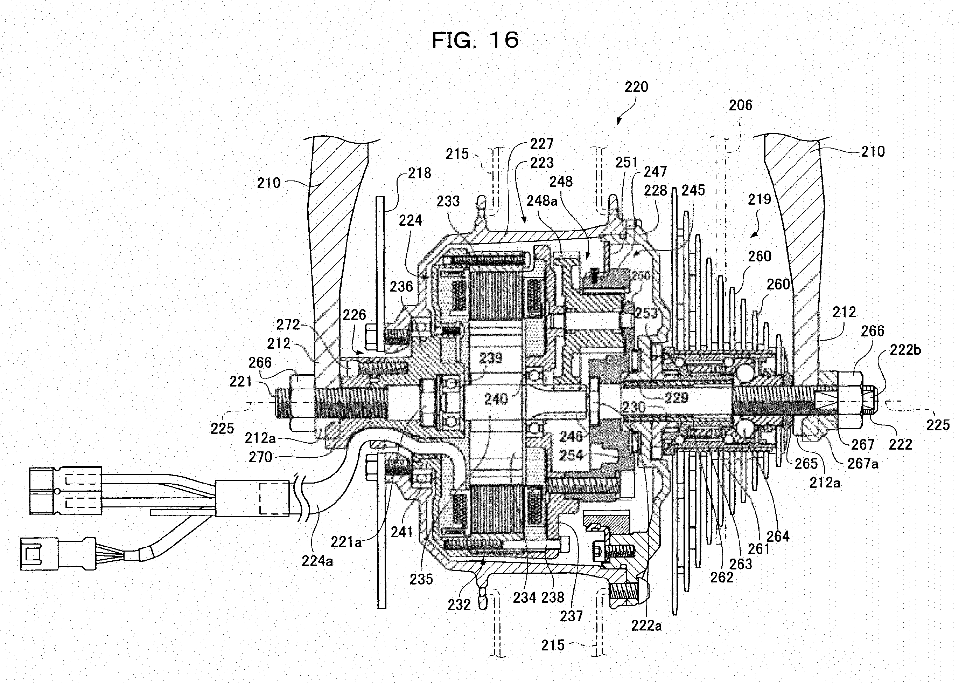

As shown in FIGS. 15, 16, and so on, the electric hub 220 has a pair of right and left hub spindles 221 and 222 for fixation on the rear claw 212 on the rear end of the chain stay 210 serving as the frame 202, a hub body 223 rotatable relative to the hub spindles 221 and 222, and a motor 224 that is disposed in the hub body 223 so as to rotate the hub body 223.

As shown in FIGS. 16 to 18, the motor 224 is a brushless motor including a motor housing 232, a stator 233 that is fixed in the motor housing 232 and is covered with resin, a rotor 234 rotatably provided inside the stator 233, and a rotating shaft 235 inserted at the center of the rotor 234. The control unit 214 switches the motor 224 between an auxiliary driving force generating operation and a regenerating operation. In the auxiliary driving force generating operation, driving of the motor 224 is controlled according to a pedal force detected by the detector 231 and an auxiliary driving force is applied to the rear wheel 204 serving as a wheel. In the regenerating operation, power is generated according to a rotary force from the rear wheel 204 to charge the battery 213.

The rotating shaft 235 of the motor 224 is located between the hub spindles 221 and 222. The hub spindles 221 and 222 and the rotating shaft 235 are disposed on the same axis 225. The motor housing 232 includes a housing body 236 (left side in FIG. 16) and a housing body 237 (right side in FIG. 16) that are separated in the direction of the axis 225 of the rotating shaft 235. The stator 233 is interposed between the housing bodies 236 and 237 that are connected with a plurality of screws 238. The rotating shaft 235 and the rotor 234 are rotatably supported by bearings 239 and 240 disposed near the center of the housing bodies 236 and 237.

The hub body 223 includes a substantially cylindrical body member 227 having an opening 226 on one end side (left side in FIG. 16) in the direction of the axis 225 of the hub spindles 221 and 222, a disc-like cover member 228 that closes another end (right side in FIG. 16) of the body member 227, a through hole 229 formed at the center of the cover member 228, and a cylindrical fitting 230 that is inserted into the through hole 229, is screwed to be joined to the cover member 228, and is rotatably fit onto the hub spindle 222.

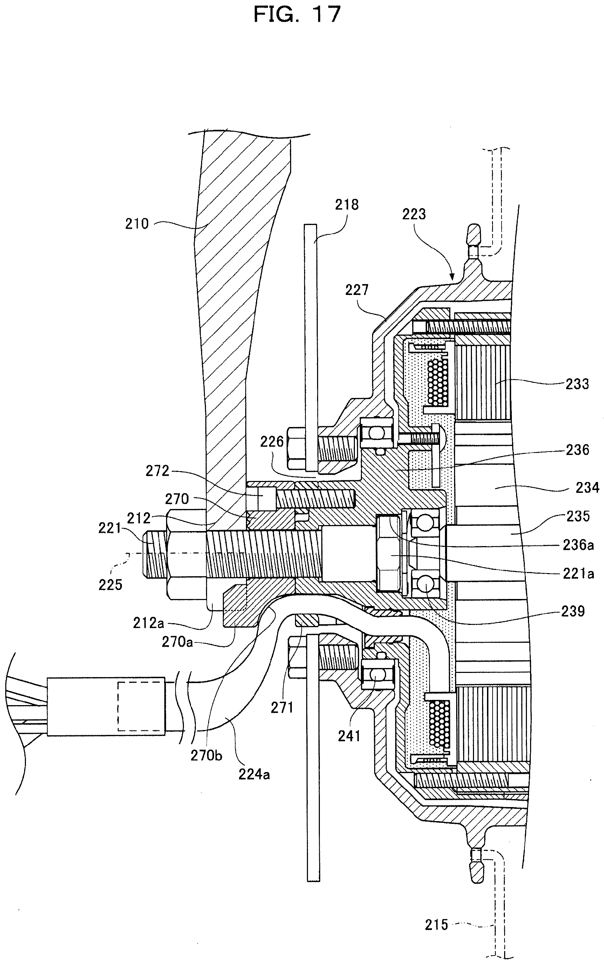

One end (left end in FIG. 16) of the body member 227 of the hub body 223 is rotatably supported by the housing body 236 via a bearing 241. As shown in FIGS. 16 and 17, the hub spindle 221 has an engaging section 221a that is formed on an end inserted into the motor 224, the engaging section 221a extending outward in the radial direction (hexagonally in the present embodiment) of the hub spindle 221. The engaging section 221a is fit into and engaged with an engaging hole section 236a shaped like a hexagonal hole formed in the housing body 236. With this configuration, the housing body 236 and the hub spindle 221 are assembled while being restrained so as not to rotate about the axis 225. The engaging section 221a of the hub spindle 221 and the engaging hole section 236a of the housing body 236, not limited to have a hexagonal shape, may have other shapes such as a square and an octagon as long as the engaging section 221a and the engaging hole section 236a are engaged while being restrained so as not to rotate with respect to each other.

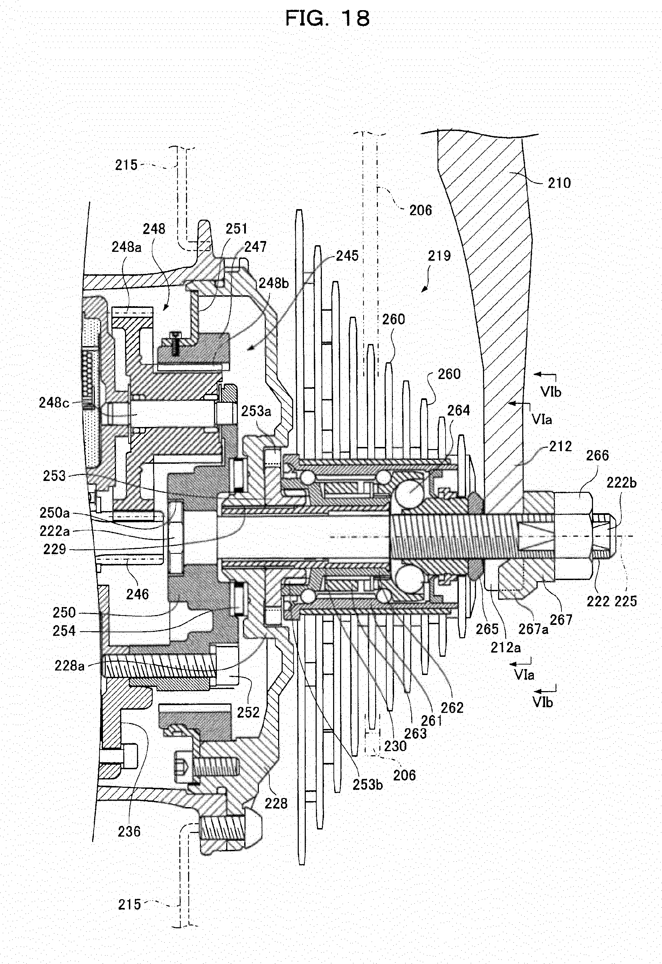

The other hub spindle 222 is inserted into the fitting 230 and enters the hub body 223 from the outside. As shown in FIGS. 16 and 18, the other hub spindle 222 has an engaging section 222a formed on an end inserted into the motor 224, the engaging section 222a extending outward in the radial direction (hexagonally in the present embodiment) of the hub spindle 222. The engaging section 222a is fit into and engaged with an engaging hole section 250a shaped like a hexagonal hole formed on a support frame 250 attached to the other housing body 237 via a screw 252. With this configuration, the support frame 250 and the other hub spindle 222 are assembled while being restrained so as not to rotate about the axis 225. The engaging section 222a of the hub spindle 222 and the engaging hole section 250a of the support frame 250, not limited to have a hexagonal shape, may have other shapes such as a square and an octagon as long as the engaging section 222a and the engaging hole section 250a are engaged while being restrained so as not to rotate with respect to each other.

As shown in FIGS. 16 and 18, the rotating shaft 235 and the hub body 223 of the motor 224 are interlocked with each other via a reduction mechanism 245 that is provided adjacent to the motor 224 in the hub body 223. The reduction mechanism 245 includes a sun gear 246 formed on an end of the rotating shaft 235, an annular internal gear 247 (an example of an annular gear) attached inside the cover member 228 via a connecting member 251, and a plurality of planetary gears 248 rotatably engaged with the sun gear 246 and the internal gear 247. One end of the planetary gear 248 is supported by the other housing body 237 of the motor 224 while another end of the planetary gear 248 is supported by the support frame 250 (an example of a support member) attached to the other housing body 237.

The planetary gear 248 has a large gear section 248a and a small-diameter gear section 248b that are formed into a single section, and a support shaft section 248c that rotatably supports the large gear section 248a and the small-diameter gear section 248b. The large gear section 248a of the planetary gear 248 is engaged with the sun gear 246 while the internal gear 247 is engaged with the small gear section 248b of the planetary gear 248. Thus, the rotation speed of the rotating shaft 235 of the motor 224 is reduced, that is, a torque is increased, and an auxiliary driving force is transmitted to the hub body 223 so as to interlock the hub body 223.

A bearing (thrust bearing) 254 is disposed between the cover member 228 and the support frame 250 so as to receive a force applied from the support frame 250 along the axis 225. In the present embodiment, an external derailleur is attached to the rear wheel 204. The external derailleur device includes a rear derailleur (not shown) and a multistage freewheel 219.

The freewheel 219 outside the hub body 223 is rotatably fit onto the other hub spindle 222. The freewheel 219 includes a cylindrical outer body 261 having a plurality of sprockets 260 engaged with the chain 206, a cylindrical inner body 262 provided in the outer body 261, and a one-way clutch 263 that is provided between the outer body 261 and the inner body 262 and transmits a turning force only to the hub body 223 from the sprockets 260. The cylindrical inner body 262 has a circular outer periphery and a hexagonal inner periphery. The inner body 262 is fit onto the other end of the fitting 230, that is, the hexagonal portion of the fitting 230. Thus, the inner body 262 and the fitting 230 are engaged with each other in the circumferential direction (rotation direction).

A serration coupling 253 that is a single section of large-diameter and small-diameter serration sections 253a and 253b is disposed between the cover member 228 and the inner body 262. The small-diameter serration section 253b of the serration coupling 253 is fit into one end of the inner body 262 while the large-diameter serration section 253a of the serration coupling 253 is fit into a boss 228a formed near the center of the cover member 228. This configuration properly transmits a force from the inner body 262 to the cover member 228.

The outer body 261 contains a bearing body 264 that rotatably supports the outer body 261. Reference numeral 265 denotes a locknut for locking balls provided in the bearing body 264.

The inner ends of the spokes 221 of the rear wheel 204 are connected to the outer periphery of the hub body 223. The hub spindles 221 and 222 are each inserted into a groove 212a serving as an engaged section formed on the rear claw 212 of the chain stay 210. A nut 266 is screwed onto each of the hub spindles 221 and 222, attaching the rear wheel 204 between the chain stays 210 together with the electric hub 220.

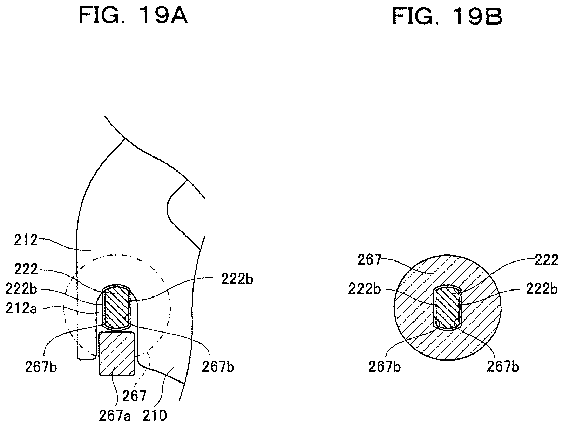

A metallic locking member 267 (may be called the other locking member 67) is provided between the nut 266 and the rear claw 212 of the chain stay 210 near the freewheel 219. The locking member 267 restrains the other hub spindle 222 so as not to rotate the hub spindle 222 about the axis 225. As shown in FIGS. 19(a) and 19(b), the locking member 267 has a protrusion 267a that serves as an integrated engaging section, the protrusion being fit into the groove 212a serving as an engaged section formed on the rear claw 212. An odd-form hole section 267b is formed at the center of the locking member 267. The hole section 267b circular in cross section is partially removed to have a shape like letter "H" with flat surfaces in cross section. Moreover, the other hub spindle 222 circular in cross section is partially cut (notched), at a portion to be fit into the locking member 267, to have a shape like letter "H" with flat surfaces in cross section according to the shape of the odd-form hole section 267b. In FIG. 19(b), reference numeral 222b denotes a notch section formed on the other hub spindle 222. Specifically, at this portion, the protrusion 267a of the locking member 267 is engaged with the groove 212a of the rear claw 212, restraining the locking member 267 so as not to rotate the locking member 267. Furthermore, the notch section 222b of the other hub spindle 222 in contact with the odd-form hole section 267b of the locking member 267 is engaged with the odd-form hole section 267b, restraining the other hub spindle 222 so as not to rotate the hub spindle 222 about the axis 225.

Meanwhile, a locking member 270 (may be called the one locking member 270) is also provided in contact with the rear claw 12 of the chain stay 210 near the brake disc of the disc braking device 218. A hole section 270b for insertion of the hub spindle in the locking member 270 and the one hub spindle 221 inserted into the hole section 270b are simply circular in cross section. This configuration does not need the notch section provided on the other hub spindle 222 or the other locking member 267. The locking member 270 is a metallic member disposed between the rear claw 212 and an exposure point to the outside from the opening 226 of the body member 227 on the housing body 236.

The locking member 270 also has a protrusion 270a that is an engaging section fit into and engaged with the groove 212a serving as an engaged section formed on the rear claw 212. The protrusion 270a is fit into the groove 212a of the rear claw 212, engaging the locking member 270 with the rear claw 212 so as not to rotate the locking member 270 about the direction of the axis 225.

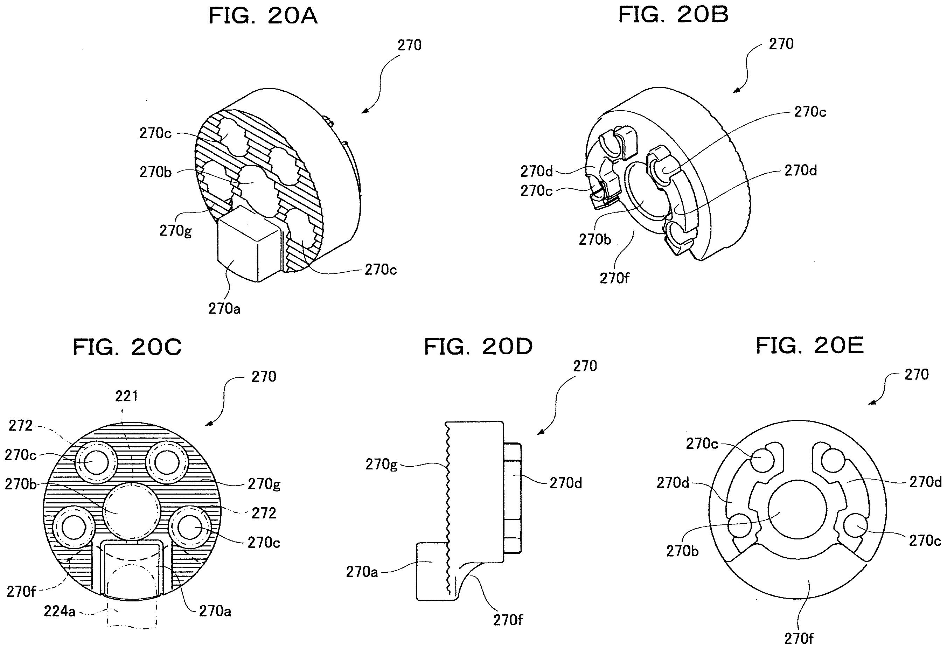

As shown in FIGS. 16, 17, and 20(a) to 20(e), the locking member 270 is directly fixed with a plurality of screws 272 at protrusions to the outside from the opening 226 of the body member 227 on the one housing body 236, the locking member 270 having a housing contact surface 270d formed on the back side of the locking member 270. Moreover, a wire drawing notch section 270f for guiding a connecting wire 224a connected to the motor 224 to the outside is formed in a location other than a screw insertion hole section 272c for the insertion of the screw 272 on the back side (facing the housing body 236) of the locking member 270 in side view, that is, a location overlapping the formed protrusion 270a (a lower part of the locking member 270) in side view in the present embodiment.

In the present embodiment, small asperities are formed on a frame contact surface 70g that is in contact with a rear claw 12 on a locking member 70. When a nut 66 to be screwed onto a hub spindle 21 is fastened, the frame contact surface 70g of the locking member 70 is firmly brought into contact with the fork-end rear claw 12.

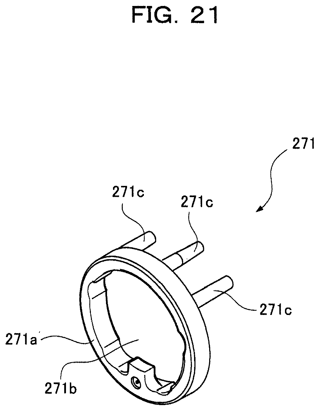

In the present embodiment, as shown in FIGS. 16, 17, and 21, a substantially annular wire holding member 271 is attached to the outer periphery of a surface of the housing body 236 with the locking member 270 attached to the surface. In the present embodiment, a plurality of protrusions 271c protruding from a main unit 271a are formed on parts of the wire holding member 271 so as to be inserted into hole sections (not shown) formed for the housing body 236. The connecting wire 224a of the motor 224 is inserted into a central hole section 271b of the wire holding member 271 while the connecting wire 224a of the motor 224 is drawn through the wire drawing notch section 270f of the locking member 270.

With this configuration, when a user rides the electric bicycle 201, a pedal force applied to the pedal 207 is detected by the detector 231 and is transmitted to the freewheel 219 via the chain 206 so as to rotate the freewheel 219. The rotation of the freewheel 219 is transmitted from the outer body 261 to the inner body 262 via the one-way clutch 263. This integrally rotates the inner body 262, the fitting 230, the cover member 228, and the body member 227, allowing the hub body 223 to rotate about the axis 225.

The control unit 214 controls driving of the motor 224 according to a pedal force detected by the detector 231. At this point, the rotating shaft 235 rotates with the rotor 234 so as to decelerate the hub body 223 rotating about the axis 225 via the reduction mechanism 245. Thus, the rear wheel 204 is rotated by a combination of a pedal force applied to the pedal 207 and a turning force (auxiliary power) applied from the motor 224 according to the pedal force.

The control unit 214 causes, for example, the motor 224 to perform a regenerating operation when braking or downhill riding is detected. Specifically, the hub body 223 is rotated in response to the rotation of the rear wheel 204, simultaneously rotating the rotating shaft 235 and the rotor 234 of the motor 224 via the reduction mechanism 245. Thus, power generated by the motor 224 is supplied to the battery 213 to charge the battery 213.

When the motor 224 generates an auxiliary driving force or perform a regenerating operation, as a matter of course, the stator 233 needs to be properly fixed. However, as shown in FIGS. 23 and 24, the conventional electric hub 780 includes the hub spindle 781 and the locking member 793 that are engaged with each other by the chamfered portions 781c and 793c. This may cause rattles between the locking member 793, the hub spindle 781, and the motor housing 790 during driving of the motor 784. In the use of the motor 784 of the electric hub 780 switched between an operation for generating an auxiliary driving force and a regenerating operation, in particular, a force is more frequently applied or a larger force is applied to the engaging hole section 790b of the motor housing 790. This configuration increases the possibility of damage, e.g., deformation on the engaging hole section 790b of the motor housing 790.

Unlike this configuration, in the embodiment of the present invention, the locking member 270 and the housing body 236 of the motor housing 232 that holds the stator 233 are fixed in contact with each other with the screws 272. Thus, the locking member 270 and the housing body 236 can be firmly fixed without rattles so as to prevent the rattles. The locking member 270 engaged with the rear claw 212 serving as a frame via the protrusion 270a is directly fixed to the housing body 236, allowing the locking member 270 limitedly positioned on the rear claw 212 to directly receive a force for regulating the rotation of the housing body 236 that holds the stator 233. Thus, the hub spindle 221 and the housing body 236 are engaged with each other at the engaging section 221a and the engaging hole section 236a so as to regulate the rotation of the housing body 236. However, this configuration can reduce a force applied to an engaging portion between the hub spindle 221 and the housing body 236 through the route. Even if the used motor 224 is switched between an operation for generating an auxiliary driving force and a regenerating operation, this configuration can prevent damage on the housing body 236, achieving higher reliability. Moreover, heat applied to the housing body 36 of the motor housing 232 is directly transmitted to the locking member 270 that is in direct contact with the motor housing 232 and the frame 202 including the chain stay 210 and the seat stay 211 through the locking member 270. This configuration can properly dissipate heat from the motor 224 to the outside, achieving higher reliability.

With this configuration, the wire drawing notch section 270f where the connecting wire 224a connected to the motor 224 is guided to the outside is formed in a location other than a screw insertion hole section 270c for the insertion of the screw 272 in side view in the locking member 270. With this configuration, the locking member 270 can be suitably fixed to the housing body 236 while the connecting wire 224a connected to the motor 224 is guided to the outside through the wire drawing notch section 270f.

The locking member 270 also has the protrusion 270a that is an engaging section engaged with the groove 212a serving as an engaged section formed on the rear claw 212. The wire drawing notch section 270f is formed in a location overlapping the groove 212a in the locking member 270 in side view. Thus, the connecting wire 224a connected to the motor 224 can be properly drawn to a position other than the chain stay 210 or the seat stay 211 as a frame. Specifically, as shown in FIG. 24(b), on the conventional locking member 793 where the connecting wire 724a is drawn, the curved recess section 793b that bends the guided connecting wire 784a is formed around the entire circumference of the locking member 793 and thus requires a mark indicating the drawing direction of the connecting wire 784a. In contrast to this configuration, according to the embodiment of the present invention, the wire drawing notch section 270f is only partially provided in the circumferential direction. This eliminates the need for a mark and allows a connecting wire 84a to be drawn to a proper position, achieving high workability.

In the present embodiment, the external derailleur and the disc braking device 218 are provided, but not exclusively. The configuration for fixing the locking member 270 and the motor housing 232 is similarly applicable even in the absence of the external derailleur and the disc braking device 218. Moreover, in the present embodiment, the locking member 270 and the housing body 236 are fixed with the screws 272, but not exclusively, only on the hub spindle 221 near the motor housing 232. In the absence of the external derailleur, the locking member 267, the support frame 250, and so on may be fixed with the screws also on the other hub spindle 222 near the reduction mechanism 245.

In the present embodiment, the electric hub 220 provided on the rear wheel 204 may be provided on the front wheel 203. The electric bicycle can perform a regenerating operation in the present embodiment but as a matter of course, the present invention is also applicable to an electric bicycle that does not perform a regenerating operation.

### Industrial Applicability

The present invention is particularly suitable for an electric bicycle including an electric hub and is also applicable to motor vehicles other than an electric bicycle, for example, an electric wheel chair, an electric motorcycle, and an electric vehicle.

## Claims

1. An electric hub comprising a human-driving-force transmitting wheel (60, 160, 260) that receives a transmitted human driving force, a hub spindle (21, 22, 121, 122, 221, 222) fixed to a frame (2, 102, 202), a hub body (23, 123, 223) rotatable relative to the hub spindle (21, 22, 121, 122, 221, 222), a motor (24, 124, 224) provided in the hub body (23, 123, 223) so as to rotate the hub body (23, 123, 223), and
a serration coupling (53, 153, 253) that transmits a human driving force from the human-driving-force transmitting wheel (60, 160, 260) to the hub body (23, 123, 223),
**characterized by**
the serration coupling (53, 153, 253) including an input serration section (53b, 153b, 253b) and an output serration section (53a, 153a, 253a) that are integrally formed, the input serration section (53b, 153b, 253b) receiving a human driving force from the human-driving-force transmitting wheel (60, 160, 260), the output serration section (53a, 153a, 253a) transmitting a human driving force to the hub body (23, 123, 223),
the output serration section (53a, 153a, 253a) being larger in diameter than the input serration section (53b, 153b, 253b),
the hub body (23, 123, 223) having a serration section (28b) that is shaped according to the output serration section (53a, 153a, 253a) and
the electric hub further comprising an unshielded bearing (154) that rotatably supports the hub body (123); and
a grease holding section (170) being capable of holding watertight grease (G), the grease holding section (170) being formed in the hub body (123) so as to hold watertight grease (G) in a location facing the at least one bearing (154) that rotatably supports the hub body (123).

2. The electric hub according to claim 1, wherein the serration section (28b) of the hub body (23, 123, 223) is formed in a recess section (28a) formed on the hub body (23, 123, 223).

3. The electric hub according to claim 1, further comprising a freewheel (19, 119, 219) for an external derailleur (18, 118),
the human-driving-force transmitting wheel (60, 160, 260) being provided on the freewheel (19, 119, 219).

4. The electric hub according to claim 3, wherein the output serration section (53a, 153a, 253a) of the serration coupling (53, 153, 253) is larger than or equal in diameter to a cylinder where the human-driving-force transmitting wheel (60, 160, 260) of the freewheel (19, 119, 219) is attached.

5. The electric hub according to claim 1, wherein the hub spindle (122) is inserted into a through hole (122a) formed on the hub body (123) and then into the hub body (123) from outside,
a rotating shaft (135) of the motor (124) and the hub body (123) are interlocked via a reduction mechanism (145) provided in the hub body (123),
the reduction mechanism (145) includes a sun gear (146) formed on the rotating shaft (135), an annular gear (147) provided in the hub body (123), and a rotatable planetary gear (148) engaged with the sun gear (146) and the annular gear (147),
the planetary gear (148) is supported by a support member (150) provided on the motor (124),
the support member (124) has a recess section (150b) that faces the through hole (122a) in an axial direction of the hub spindle (122), and
the grease holding section (170) is a space facing the recess section (150b).

6. The electric hub according to claim 1, wherein the bearing (154) is a thrust needle roller bearing (154).

7. The electric hub according to claim 1, wherein the grease holding section (170) is formed behind the bearing (154) in an axial direction of the hub spindle (122).

8. The electric hub according to claim 1, wherein the bearing (154) has a bearing ring (154a), and grease (G) is also applied between the bearing ring (154a) and an installation point of the bearing (154).

9. The electric hub according to claim 1, further comprising a freewheel (119) for an external derailleur (118).

10. The electric hub according to claim 1, further comprising:
a motor housing (232) having a fixed motor stator (233) and the engaged hub spindle (222); and
a locking member (270) that is fit onto the hub spindle (221), is engaged with the frame (202), and is attached so as not to rotate about an axis (225) of the hub spindle (222), wherein the locking member (270) and the motor housing (232) in contact with each other are fixed with a screw (272).

11. The electric hub according to claim 10, wherein the used motor (224) is switched between an operation for generating an auxiliary driving force to be applied to a wheel (204) and a regenerating operation for generating electric power according to a force from the wheel (204).

12. The electric hub according to claim 10, wherein the hub spindle (21, 22, 121, 122, 221, 222) is composed of right and left hub spindles (21, 22, 121, 122, 221, 222),
the electric hub (20, 120, 220 further including a rotating shaft (35, 135, 235 that is disposed between the hub spindles (21, 22, 121, 122, 221, 222) so as to rotate about the same axis (25, 125, 225) as the hub spindles (21, 22, 121, 122, 221, 222).

13. The electric hub according to claim 10, wherein the locking member (270) has a wire drawing notch section (270f) where a connecting wire (224a) connected to the motor (224) is guided to outside, the wire drawing notch section (270f) being formed in a location other than a screw insertion hole section (272c) for insertion of the screw (272) in side view.

14. The electric hub according to claim 13, wherein the locking member (270) has an engaging section (270a) that regulates a circumferential rotation relative to the frame (202) while being engaged with an engaged section (212a) formed on the frame (202), and the wire drawing notch section (270f) is formed in a location overlapping the engaging section (270a) on the locking member (270) in side view.

15. An electric bicycle comprising the electric hub (20. 120, 220) according to any one of claims 1 to 14.

## Patentansprüche

1. Elektrische Nabe, die ein Rad (60, 160, 260) zum Übertragen menschlicher Antriebskraft, das eine übertragene menschliche Antriebskraft empfängt, eine Naben-Spindel (21, 22, 121, 122, 221, 222), die an einem Rahmen (2, 102, 202) befestigt ist, einen Naben-Körper (23, 123, 223), der relativ zu der Naben-Spindel (21, 22, 121, 122, 221, 222) gedreht werden kann, einen Motor (24, 124, 224), der sich in dem Naben-Körper (23, 123, 223) befindet und den Naben-Körper (23, 123, 223) dreht, sowie
eine Kerbzahn-Kupplung (53, 153, 253) umfasst, die eine menschliche Antriebskraft von dem Rad (60, 160, 62) zum Übertragen menschlicher Antriebskraft zu dem Naben-Körper (23, 123, 223) überträgt,
**dadurch gekennzeichnet, dass**
die Kerbzahn-Kupplung (53, 153, 253) einen Eingangs-Kerbzahn-Teilabschnitt (53b, 153b, 253b) sowie einen Ausgangs-Kerbzahn-Teilabschnitt (53a, 153a, 253a) enthält, die integral ausgebildet sind, der Eingangs-Kerbzahn-Teilabschnitt (53b, 153b, 253b) eine menschliche Antriebskraft von dem Rad (60, 160, 62) zum Übertragen menschlicher Antriebskraft empfängt und der Ausgangs-Kerbzahn-Teilabschnitt (53a, 153a, 253a) eine menschliche Antriebskraft zu dem Naben-Körper (23, 123, 223) überträgt,
der Ausgangs-Kerbzahn-Teilabschnitt (53a, 153a, 253a) einen größeren Durchmesser hat als der Eingangs-Kerbzahn-Teilabschnitt (53b, 153b, 253b),
der Naben-Körper (23, 123, 223) einen Kerbzahn-Teilabschnitt (28b) hat, der entsprechend dem Ausgangs-Kerbzahn-Teilabschnitt (53a, 153a, 253a) geformt ist, und
die elektrische Nabe des Weiteren ein nicht abgedichtetes Lager (154) umfasst, das den Naben-Körper (123) drehbar lagert; und
einen Fett-Aufnahme-Teilabschnitt (170), der Fett (G) wasserdicht aufnehmen kann, wobei der Fett-Aufnahme-Teilabschnitt (170) in dem Naben-Körper (123) so ausgebildet ist, dass er Fett (D) an einer Position wasserdicht aufnimmt, die dem wenigstens einen Lager (154) zugewandt ist, das den Naben-Körper (123) drehbar lagert.

2. Elektrische Nabe nach Anspruch 1, wobei der Kerbzahn-Teilabschnitt (28b) des NabenKörpers (23, 123, 223) in einem an dem Naben-Körper (23, 123, 223) ausgebildeten Aussparungs-Teilabschnitt (28a) ausgebildet ist.

3. Elektrische Nabe nach Anspruch 1, die des Weiteren einen Freilauf (19, 119, 92) für eine äußere Kettenschaltung (18, 118) umfasst,
wobei sich das Rad (60, 160, 62) zum Übertragen menschlicher Antriebskraft an dem Freilauf (19, 119, 219) befindet.

4. Elektrische Nabe nach Anspruch 3, wobei der Durchmesser des Ausgangs-Kerbzahn-Teilabschnitts (53a, 153a, 253a) der Kerbzahn-Kupplung (53, 153, 253) größer ist als oder genauso groß wie der eines Zylinders, an dem das Rad (60, 160, 260) zum Übertragen menschlicher Antriebskraft des Freilaufs (19, 119, 219) angebracht ist.

5. Elektrische Nabe nach Anspruch 1, wobei die Naben-Spindel (122) von außen in ein an dem Naben-Körper (123) ausgebildetes Durchgangsloch (122a) und dann in den Naben-Körper (123) eingeführt wird,
eine Drehwelle (135) des Motors (124) und der Naben-Körper (123) über einen in dem Naben-Körper (123) vorhandenen Untersetzungsmechanismus (145) gekoppelt sind,
der Untersetzungsmechanismus (145) ein Sonnenrad (146), das an der Drehwelle (135) ausgebildet ist, ein in dem Naben-Körper (123) befindliches Innenzahnrad (147), sowie ein mit dem Sonnenrad (146) und dem Innenzahnrad (147) in Eingriff befindliches drehbares Planetenrad (148) enthält,
das Planetenrad (148) über ein an dem Motor (124) vorhandenes Lagerungselement (150) gelagert ist,
das Lagerungselement (150) einen Aussparungs-Teilabschnitt (150b) aufweist, der dem Durchgangsloch (122a) in einer axialen Richtung der Naben-Spindel (122) zugewandt ist, und
der Fett-Aufnahme-Teilabschnitt (170) ein dem Aussparungs-Teilabschnitt (150b) zugewandter Raum ist.

6. Elektrische Nabe nach Anspruch 1, wobei das Lager (154) ein Axial-Nadellager (154) ist.

7. Elektrische Nabe nach Anspruch 1, wobei der Fett-Aufnahme-Teilabschnitt (170) in einer axialen Richtung der Naben-Spindel (122) hinter dem Lager (154) ausgebildet ist.

8. Elektrische Nabe nach Anspruch 1, wobei das Lager (154) einen Lagerring (154a) aufweist und Fett (G) auch zwischen dem Lagerring (154a) und einem Installationspunkt des Lagers (154) aufgebracht ist.

9. Elektrische Nabe nach Anspruch 1, die des Weiteren einen Freilauf (119) für eine äußere Kettenschaltung (118) umfasst,

10. Elektrische Nabe nach Anspruch 1, die des Weiteren umfasst:
ein Motor-Gehäuse (232), das einen festen Motor-Ständer (233) sowie die in Eingriff befindliche Naben-Spindel (222) aufweist; und
ein Arretierelement (270), das auf die Naben-Spindel (221) aufgepasst ist, mit dem Rahmen (202) in Eingriff ist und so angebracht ist, dass es sich nicht um eine Achse (225) der Naben-Spindel (222) herum dreht, wobei das Arretierelement (72) und das Motor-Gehäuse (232) in Kontakt miteinander mit einer Schraube (272) fixiert sind.

11. Elektrische Nabe nach Anspruch 10, wobei der im Einsatz befindliche Motor (224) zwischen einer Funktion zum Erzeugen einer Hilfs-Antriebskraft, die auf ein Rad (204) ausgeübt wird, und einer Regenerierungs-Funktion zum Erzeugen von elektrischer Energie entsprechend einer Kraft von dem Rad (204) umgeschaltet wird.

12. Elektrische Nabe nach Anspruch 10, wobei die Naben-Spindel (21, 22, 121, 122, 221, 222) aus einer rechten und einer linken Naben-Spindel (21, 22, 121, 122, 221, 222) besteht,
die elektrische Nabe (20, 120, 220) des Weiteren eine Drehwelle (35, 135, 235) enthält, die zwischen den Naben-Spindeln (21, 22, 121, 122, 221, 222) so angeordnet ist, dass sie sich um die gleiche Achse (25, 125, 225) herum dreht wie die Naben-Spindeln (21, 22, 121, 122, 221, 222).

13. Elektrische Nabe nach Anspruch 10, wobei das Arretierelement (270) einen Drahtführungs-Einkerbungs-Teilabschnitt (270f) aufweist, in dem ein mit dem Motor (224) verbundener Verbindungsdraht (224a) nach außen geführt wird, wobei der Drahtführungs-Einkerbungs-Teilabschnitt (270f) an einer anderen Position in Seitenansicht ausgebildet ist als ein Schrauben-Einführloch-Teilabschnitt (270c) zum Einführen der Schraube (272).

14. Elektrische Nabe nach Anspruch 13, wobei das Arretierelement (270) einen aktiven Eingriffs-Teilabschnitt (270a) aufweist, der eine Umfangsdrehung relativ zu dem Rahmen (202) reguliert und dabei in Eingriff mit einem an dem Rahmen (202) ausgebildeten passiven Eingriffs-Teilabschnitt (212a) ist, und der Drahtführungs-Einkerbungs-Teilabschnitt (270f) an einer Position ausgebildet ist, die sich in Seitenansicht mit dem aktiven Eingriffs-Teilabschnitt (270a) an dem Arretierelement (270) überlappt.

15. Elektrofahrrad, das die elektrische Nabe (20, 120, 220) nach einem der Ansprüche 1 bis 14 umfasst.

## Revendications

1. Moyeu électrique comprenant une roue transmettant une force d'entraînement humaine (60, 160, 260) qui reçoit une force d'entraînement humaine transmise, un arbre de moyeu (21, 22, 121, 122, 221, 222) fixé à un châssis (2, 102, 202), un corps de moyeu (23, 123, 223) rotatif par rapport à l'arbre de moyeu (21, 22, 121, 122, 221, 222), un moteur (24, 124, 224) pourvu dans le corps de moyeu (23, 123, 223) de manière à faire tourner le corps de moyeu (23, 123, 223), et un couplage à dentelure (53, 153, 253) qui transmet une force d'entraînement humaine depuis la roue transmettant une force d'entraînement humaine (60, 160, 260) vers le corps de moyeu (23, 123, 223),
**caractérisé en ce que**
le couplage à dentelure (53, 153, 253) comprend une section de dentelure d'entrée (53b, 153b, 253b) et une section de dentelure de sortie (53a, 153a, 253a) qui sont conformées de manière intégrée,
la section de dentelure d'entrée (53b, 153b, 253b) reçoit une force d'entraînement humaine provenant de la roue transmettant une force d'entraînement humaine (60, 160, 260),
la section de dentelure de sortie (53a, 153a, 253a) transmet une force d'entraînement humaine au corps de moyeu (23, 123, 223),
la section de dentelure de sortie (53a, 153a, 253a) présente un diamètre supérieur à celui de la section de dentelure d'entrée (53b, 153b, 253b),
le corps de moyeu (23, 123, 223) présente une section de dentelure (28b) conformée selon la section de dentelure de sortie (53a, 153a, 253a), et
le moyeu électrique comprend en outre un roulement sans flasques (154) qui supporte le corps de moyeu de manière rotative (123) ; et
une section contenant de la graisse (170) est capable de contenir de la graisse d'étanchéité (G), la section contenant de la graisse (170) étant conformée dans le corps de moyeu (123) de manière à contenir de la graisse d'étanchéité (G) à un emplacement faisant face audit au moins un roulement (154) qui supporte le corps de moyeu (123) de manière rotative.

2. Moyeu électrique selon la revendication 1, dans lequel la section de dentelure (28b) du corps de moyeu (23, 123, 223) est formée dans une section de renfoncement (28a) formée sur le corps de moyeu (23, 123, 223).

3. Moyeu électrique selon la revendication 1, comprenant en outre une roue libre (19, 119, 219) pour un dérailleur externe (18, 118), la roue transmettant une force d'entraînement humaine (60, 160, 260) étant pourvue sur la roue libre (19, 119, 219).

4. Moyeu électrique selon la revendication 3, dans lequel le diamètre de la section de dentelure de sortie (53a, 153a, 253a) du couplage à dentelure (53, 153, 253) est supérieur ou égal au diamètre d'un cylindre auquel est attachée la roue transmettant une force d'entraînement humaine (60, 160, 260) de la roue libre (19, 119, 219).

5. Moyeu électrique selon la revendication 1, dans lequel
l'arbre de moyeu (122) est inséré dans un trou traversant (122a) formé sur le corps de moyeu (123) et ensuite dans le corps de moyeu (123) depuis l'extérieur,
un axe rotatif (135) du moteur (124) et le corps de moyeu (123) sont enclenchés mutuellement via un mécanisme de réduction (145) pourvu dans le corps de moyeu (123),
le mécanisme de réduction (145) comprend un engrenage solaire (146) formé sur l'axe rotatif (135), un engrenage annulaire (147) pourvu dans le corps de moyeu (123), et un engrenage planétaire rotatif (148) engagé avec l'engrenage solaire (146) et l'engrenage annulaire (147),
l'engrenage planétaire (148) est supporté par un élément de support (150) pourvu sur le moteur (124),
l'élément de support (124) comporte une section de renfoncement (150b) qui fait face au trou traversant (122a) en direction axiale de l'arbre de moyeu (122), et
la section contenant de la graisse (170) est un espace faisant face à la section de renfoncement (150b).

6. Moyeu électrique selon la revendication 1, dans lequel le roulement (154) est une butée à aiguilles (154).

7. Moyeu électrique selon la revendication 1, dans lequel la section contenant de la graisse (170) est formée derrière le roulement (154) en direction axiale de l'arbre de moyeu (122).

8. Moyeu électrique selon la revendication 1, dans lequel le roulement (154) comporte un anneau de roulement (154a), et de la graisse (G) est également appliquée entre l'anneau de roulement (154a) et un point d'installation du roulement (154).

9. Moyeu électrique selon la revendication 1, comprenant en outre une roue libre (119) pour un dérailleur externe (118).

10. Moyeu électrique selon la revendication 1, comprenant en outre :
un boîtier de moteur (232) recevant un stator de moteur fixe (233) et l'arbre de moyeu engagé (222) ; et
un élément de verrouillage (270) qui est monté sur l'arbre de moyeu (221), engagé avec le châssis (202) et attaché de manière à ne pas tourner autour d'un axe (225) de l'arbre de moyeu (222),
dans lequel l'élément de verrouillage (270) et le boîtier du moteur (232) en contact mutuel sont fixés avec une vis (272).

11. Moyeu électrique selon la revendication 10, dans lequel le moteur (224) utilisé est commuté entre un fonctionnement de génération pour générer une force d'entraînement auxiliaire à appliquer à une roue (204) et un fonctionnement de régénération pour générer de l'énergie électrique à partir d'une force provenant de la roue (204).

12. Moyeu électrique selon la revendication 10, dans lequel l'arbre de moyeu (21, 22, 121, 122, 221, 222) est composé d'arbres de moyeu droit et gauche (21, 22, 121, 122, 221, 222),
le moyeu électrique (20, 120, 220) comprenant en outre un axe rotatif (35, 135, 235) qui est disposé entre les arbres de moyeu (21, 22, 121, 122, 221, 222) de manière à tourner autour du même axe (25, 125, 225) que les arbres de moyeu (21, 22, 121, 122, 221, 222).

13. Moyeu électrique selon la revendication 10, dans lequel l'élément de verrouillage (270) comporte une section à encoche passe-fil (270f) où un fil de connexion (224a) connecté au moteur (224) est guidé vers l'extérieur, la section à encoche passe-fil (270f) étant formée à un emplacement autre qu'une section de trou d'insertion de vis (272c) pour l'insertion de la vis (272) en vue latérale.

14. Moyeu électrique selon la revendication 13, dans lequel l'élément de verrouillage (270) comporte une section d'engagement (270a) qui régule une rotation circonférentielle par rapport au châssis (202) tout en étant engagée avec une section engagée (212a) formée sur le châssis (202), et la section à encoche passe-fil (270f) est formée à un emplacement qui chevauche la section d'engagement (270a) sur l'élément de verrouillage (270) en vue latérale.

15. Vélo électrique comprenant le moyeu électrique (20, 120, 220) selon l'une quelconque des revendications 1 à 14.
